# EUROPÄISCHE PATENTSCHRIFT

(11) **EP 3 559 095 B1**
(45) Veröffentlichungstag und Bekanntmachung des Hinweises auf die Patenterteilung: **04.08.2021**
(21) Anmeldenummer: 17821571.1
(22) Anmeldetag: 18.12.2017
(51) Int. Cl.: C08J 5/18, B32B 27/08, B32B 27/36, B42D 25/29, B42D 25/23, B42D 25/00

(54) **KUNSTSTOFFFOLIEN FÜR ID-DOKUMENTE MIT VERBESSERTER LASERGRAVIERBARKEIT UND VERBESSERTER CHEMIKALIENBESTÄNDIGKEIT**
PLASTIC FILMS FOR ID DOCUMENTS WITH IMPROVED LASER ENGRAVING AND IMPROVED CHEMICAL RESISTANCE
FEUILLES EN MATIÈRE PLASTIQUE POUR DOCUMENT D'ID À CAPACITÉ DE GRAVURE LASER ET À RÉSISTANCE AUX PRODUITS CHIMIQUES AMÉLIORÉES

(30) Priorität: 22.12.2016 EP 16206115
(43) Veröffentlichungstag der Anmeldung: 30.10.2019
(73) Patentinhaber: Covestro Deutschland AG, 51373 Leverkusen (DE)
(72) Erfinder: PUDLEINER, Heinz, 47800 Krefeld (DE); TZIOVARAS, Georgios, 41464 Neuss (DE); PLANKEN, Kira, 47574 Goch (DE); JANKE, Stefan, 41379 Brüggen (DE); KÖHLER, Christoph, 47269 Duisburg (DE)
(74) Vertreter: Levpat
(86) Internationale Anmeldenummer: PCT/EP2017/083367
(87) Internationale Veröffentlichungsnummer: WO 2018/114836

(56) Entgegenhaltungen:
- EP-A1- 0 106 225
- EP-A1- 1 637 318
- EP-A1- 2 130 674
- WO-A1-2004/050766
- WO-A1-2010/034407
- WO-A1-2010/046042
- WO-A1-2013/107773
- WO-A1-2013/107777

## Beschreibung

Die vorliegende Erfindung betrifft Kunststofffolien mit verbesserter Lasergravierbarkeit, Chemikalienbeständigkeit und mechanischer Belastung, besondere Ausführungsformen solcher Folien in Form von Coextrusionsfolien, Schichtaufbauten umfassend solche Folien, Verwendung solcher Folien, sowie Sicherheitsdokumente, bevorzugt Identifikationsdokumente enthaltend solche Folien.

Das Beschreiben von Kunststofffolien mittels Lasergravur ist ein wichtiger Schritt bei der Herstellung von Folienverbunden. Derartige Folienverbunde spielen z.B. eine große Rolle für Sicherheitsdokumente, insbesondere Identifikationsdokumente wie Pässe, Ausweise, ID-Karten oder Kreditkarten. Das schwarz/weiß Personalisieren von Karten mittels Lasergravur, d.h. das Aufbringen von Schriftzügen oder Abbildungen wie schwarz/weiß-Fotos ist allgemein bekannt. Im Allgemeinen zeichnet sich das Personalisieren mittels Lasergravur insbesondere durch seine hohe Fälschungssicherheit aus. Das (Schrift-)Bild entsteht im Inneren der Karte, so dass ein Entfernen des (Schrift-)Bildes und Erstellung eines neuen (Schrift-)Bildes nicht möglich ist. Ein Trennen der Karten in ihre einzelnen Schichten, um an die Laser-Schicht zu gelangen, ist beispielsweise bei Karten, welche vollständig aus Polycarbonat hergestellt werden, nicht möglich. Darüber hinaus sind einzelne Schichten solcher Kartenverbunde in der Regel für ein farbiges Design mit Offset bedruckt. Bei der Lasergravur besteht das Risiko, dass besonders Bereiche mit intensiver Schwarzfärbung zur Schädigung oder sogar zum Verbrennen der Offset-Druck-Schicht führen können. Damit wird die Karte unbrauchbar. Da die Lasergravur am Ende des Herstellprozesses der Karte durchgeführt wird, führt eine nicht akzeptable Qualität zu einer Verringerung der Kartenausbeute. Diese Folienverbunde werden in der Regel im Inneren des Folienverbundes mittels Lasergravur personalisiert. Weitere Deckfolien zum Schutz gegen Chemikalien und gegen äußere Einwirkung sind in solchen Sicherheitsdokumenten empfehlenswert.

WO 2010/089035 A1 offenbart Schichtaufbauten mit verbesserter Lasergravierbarkeit, Coextrusionsfolien mit verbesserter Lasergravierbarkeit sowie Sicherheitsdokumente, bevorzugt Identifikationsdokumente enthaltend solche Schichtaufbauten. Die in WO 2010/089035 A1 offenbarten Schichtaufbauten basieren auf Polycarbonat und umfassen eine lasersensitive Schicht. Diese Folien weisen Nachteile in Bezug auf Laminierbarkeit mit handelsüblichen Deckfolien wie beispielsweise solche aus PVC (Polyvinylchlorid) oder PETG (glycolisiertes Polyethylenterephthalat) und Chemikalienbeständigkeit auf.

WO 2005/110773 A offenbart mehrlagige tragbare Datenträger, die eine coextrudierte mehrschichtige Kernfolie und eine coextrudierte mehrschichtige Deckfolie aufweisen. Die Deckfolie besteht wenigstens zum Teil aus einem Co-Polyester und/oder einem kristallinen, teilkristallinen oder mikrokristallinen Polyester und/oder einem Polycarbonat. Die Laserung der in WO 2005/110773 A offenbarten Datenträgern erfolgt in der Kernschicht.

Im Bereich der Sicherheitsdokumente, insbesondere Identifikationsdokumente wie Pässe, Ausweise, ID-Karten, Bank- oder Kreditkarten bestand somit Bedarf an Folien, insbesondere an Deckfolien, die eine hohe Chemikalienbeständigkeit aufweisen und sich gut zu Schichtverbunden laminieren lassen und die gleichzeitig eine gute Lasergravierbarkeit zur Personalisierung aufweisen.

Der Erfindung lag daher die Aufgabe zugrunde, eine Folie, insbesondere eine Deckfolie, bereitzustellen, die neben einer hohen Chemikalienbeständigkeit eine gute Laminierbarkeit zu Schichtverbunden aufweist. Weiterhin bestand die Aufgabe darin, eine Folie, insbesondere eine Deckfolie, bereitzustellen, die zusätzlich auch eine kontrastreiche Lasergravierbarkeit aufweist, ohne den darunterliegenden Schichtverbund nachteilig zu beeinträchtigen oder zu beschädigen.

Überraschend wurde gefunden, dass eine Folie umfassend wenigstens eine Schicht (i) enthaltend mindestens einen Blend aus wenigstens einem oder mehreren Poly- oder Copolykondensat(en) einer aromatischen und/oder Cycloalkyl-Dicarbonsäure und aliphatischen, cycloaliphatischen und/oder araliphatischen Diolen mit 2 bis 16 Kohlenstoffatomen mit einem oder mehreren Poly-oder Copolycarbonat(en), dadurch gekennzeichnet, dass der Anteil an Poly- oder Copolycarbonat(en) in diesem Blend in einem Bereich von ≥ 50 Gew.-% bis ≤ 90 Gew.-%, vorzugsweise einem Bereich von ≥ 60 Gew.-% bis ≤ 80 Gew.-% ganz besonders bevorzugt in einem Bereich von ≥ 60 Gew.-% bis ≤ 70 Gew.-% liegt, und dass das oder die Poly-oder Copolykondensat(e) einer aromatischen und/oder Cycloalkyl-Dicarbonsäure und aliphatischen, cycloaliphatischen und/oder araliphatischen Diolen mit 2 bis 16 Kohlenstoffatomen einen Anteil an 1,4-Cyclohexandimethanol, 1,3-Cyclohexandimethanol und/oder 2,2,4,4-Tetramethyl-1,3-cyclobutandiol in einem Bereich von ≥ 20 bis ≤ 80 mol-%, vorzugsweise in einem Bereich von ≥ 25 bis ≤ 75 mol-% und besonders bevorzugt in einem Bereich von ≥ 25 bis ≤ 70 mol-%, bezogen auf die Diolkomponente aufweisen, sich gut zu einem Schichtverbund laminieren lässt und eine hohe Beständigkeit gegenüber Chemikalien, insbesondere gegenüber Hautfett und Aceton aufweist.

Im Rahmen der Erfindung sind unter ppm Gew.-ppm zu verstehen, sofern nichts anderes angegeben wird.

Im Rahmen der Erfindung ist unter Polycarbonat Poly- und/oder Copolycarbonat zu verstehen.

Die wenigstens eine Schicht (i) der erfindungsgemäßen Folie umfasst wenigstens ein lasersensitives Additiv, vorzugsweise ein Schwarzpigment, besonders bevorzugt Ruß. Diese Ausführungsform der Erfindung lässt sich gut mittels Lasergravur personalisieren, ohne dass diese Lasergravur in ihrer Schärfe, Kontrast und Auflösung beeinträchtigt wird.

Die Beschriftung von Kunststoff-Folien mittels Lasergravur wird in der Fachwelt und auch im Folgenden kurz als Laserbeschriftung bezeichnet. Demnach ist im Folgenden unter dem Begriff "laserbeschriftet" mittels Lasergravur beschriftet zu verstehen. Das Verfahren der Lasergravur ist dem Fachmann bekannt und nicht zu verwechseln mit dem Bedrucken mittels Laserdruckern.

Als lasersensible Additive kommen beispielsweise sogenannte Laser-Markier-Additive in Frage, d.h. solche aus einem Absorber im Wellenlängenbereich des zu verwendenden Lasers, bevorzugt im Wellenlängenbereich von ND:YAG-Lasern (Neodym-dotierte Yttrium-Aluminium-Granat-Laser). Solche Laser-Markier-Additive und deren Verwendung in Formmassen sind beispielsweise in WO-A 2004/50766 und WO-A 2004/50767 beschrieben und werden von der Fa. DSM unter dem Markennamen Micabs® kommerziell angeboten. Weiterhin als lasersensible Additive geeignete Absorber sind Ruß, sowie phosphorhaltige Zinn-Kupfer-Mischoxide wie z.B. in WO-A 2006/042714 beschrieben.

Bevorzugt sind lasersensible Additive für zur Lasergravurbeschriftung von dunkel auf hellem Untergrund. Besonders bevorzugte lasersensible Additive im Rahmen der Erfindung sind Schwarzpigmente. Ein ganz besonders bevorzugtes lasersensibles Additiv ist Ruß.

Das lasersensitives Additiv kann in der erfindungsgemäßen Folie in einer Menge von 40 bis 180 ppm, vorzugsweise von 50 bis 160 ppm enthalten sein.

Bevorzugt ist es, wenn die Korngröße des lasersensiblen Additivs im Bereich von 100 nm bis 10 µm liegt, und besonders vorteilhaft, wenn sie im Bereich von 50 nm bis 2 µm liegt.

Die wenigstens eine Schicht (i) der erfindungsgemäßen Folie enthält mindestens einen Blend aus wenigstens einem oder mehreren Poly- oder Copolykondensat(en) einer aromatischen und/oder Cycloalkyl-Dicarbonsäure und aliphatischen, cycloaliphatischen und/oder araliphatischen Diolen mit 2 bis 16 Kohlenstoffatomen mit einem oder mehreren Poly- oder Copolycarbonat(en), dadurch gekennzeichnet, dass der Anteil an Poly- oder Copolycarbonat(en) in diesem Blend in einem Bereich von ≥ 50 Gew.-% bis ≤ 90 Gew.-%, vorzugsweise einem Bereich von ≥ 60 Gew.-% bis ≤ 80 Gew.-%, ganz besonders bevorzugt in einem Bereich von ≥ 60 Gew.-% bis ≤ 70 Gew.-% liegt, und dass das oder die Poly-oder Copolykondensat(e) einer aromatischen und/oder Cycloalkyl-Dicarbonsäure und aliphatischen, cycloaliphatischen und/oder araliphatischen Diolen mit 2 bis 16 Kohlenstoffatomen einen Anteil an 1,4-Cyclohexandimethanol, 1,3-Cyclohexandimethanol und/oder 2,2,4,4-Tetramethyl-1,3-Cyclobutandiol, vorzugsweise 1,4-Cyclohexandimethanol und/oder 1,3-cyclohexandimethanol in einem Bereich von ≥ 20 bis ≤ 80 mol-%, vorzugsweise in einem Bereich von ≥ 25 bis ≤ 75 mol-% und besonders bevorzugt in einem Bereich von ≥ 25 bis ≤ 70 mol-%, bezogen auf die Diolkomponente aufweisen, wobei diese wenigstens eine Schicht (i) wenigstens ein lasersensitives Additiv, vorzugsweise ein Schwarzpigment, besonders bevorzugt Ruß, enthält, wobei das lasersensitive Additiv, vorzugsweise ein Schwarzpigment, besonders bevorzugt Ruß, in einer Menge von 40 bis 180 ppm, vorzugsweise von 50 bis 160 ppm enthalten ist.

Im Folgenden werden die Komponenten des Blends näher beschrieben.

Die Poly- oder Copolykondensate einer aromatischen und/oder Cycloalkyl-Dicarbonsäure und aliphatischen, cycloaliphatischen und/oder araliphatischen Diolen mit 2 bis 16 Kohlenstoffatomen lassen sich nach bekannten Methoden aus der entsprechenden Dicarbonsäure (oder ihren reaktionsfähigen Derivaten) und aliphatischen, cycloaliphatischen und/oder araliphatischen Diolen mit 2 bis 16 C-Atomen herstellen (Kunststoff-Handbuch Bd. VIII, S. 695 ff, Karl-Hanser-Verlag, München 1973).

Als Dicarbonsäure des Poly- oder Copolykondensats kann wenigstens eine Verbindung aus der Gruppe Orthophthalsäure, Terephthalsäure, Isophthalsäure, tert-Butylisophthalsäure, 3,3'-Diphenyl-dicarbonsäure, 4,4'-Diphenyldicarbonsäure, 4,4-Benzophenondicarbonsäure, 3,4'-Benzophenon-dicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure, Naphthalin-1,4-dicarbonsäure, Naphthalin-1,5-dicarbonsäure, Naphthalin-2,6-dicarbonsäure und /oder Cyclohexandicarbonsäure oder die reaktionsfähigen Derivate der genannten Dicarbonsäuren, vorzugsweise Terephthalsäure, Naphthalin-1,4-dicarbonsäure, Naphthalin-1,5-dicarbonsäure, Naphthalin-2,6-dicarbonsäure und/oder Isophathalsäure oder die reaktionsfähigen Derivate der genannten Dicarbonsäuren, besonders bevorzugt Terephthalsäure und/oder Isophthalsäure oder deren reaktionsfähigen Derivate und ganz besonders bevorzugt Terephthalsäure oder ein reaktionsfähiges Derivat der Terephthalsäure eingesetzt werden.

Die Säurekomponente des Poly-oder Copolykondensats kann neben den vorstehend genannten Dicarbonsäuren noch bis zu 20 Mol-% andere aromatische Dicarbonsäuren mit 8 bis 14 C-Atomen oder aliphatische Dicarbonsäuren mit 4 bis 12 C-Atomen enthalten, wie beispielsweise Phthalsäure, Isophthalsäure, Naphthalin-2,6-dicarbonsäure, 4,4'-Diphenyldicarbonsäure, Bernstein-, Adipin-, Sebacinsäure, Malonsäure, Glutarsäure, Dodecandicarbonsäure, Korksäure, Pimelinsäure, Azelainsäure, Cyclohexandiessigsäure.

Als Diolkomponente des Poly- oder Copolykondensats können aliphatische, cycloaliphatische oder araliphatische Diole mit 2 bis 16 C-Atomen eingesetzt werden, wie beispielsweise Ethylenglykol, Diethylenglycol, 1,2-Propandiol, 1, 3-Propandiol, Neopentylglykol, 1,4-Butandiol, 1,5-Pentandiol, 1,6-Hexandiol, p-Xyloldiol und Mischungen aus mindestens zwei der vorstehenden Verbindungen, vorzugsweise Etyhlengylkol, Diethylengylkol, 1, 4-Butandiol sowie Mischungen aus mindestens zwei der vorstehenden Verbindungen.

Die Diolkomponente kann noch bis zu 10 Mol-% andere aliphatischer Diole mit 3 bis 12 C-Atomen oder cycloaliphatischer Diole mit 6 bis 21 C-Atomen enthalten, wie beispielsweise 2-Ethylpropandiol-1,3, 3-Methylpentandiol-2,4, 2-Methylpentandiol-2,4, 2,2,4-Trimethylpentandiol-1,3 und 2-Ethylhexandiol-1,6, 2,2-Diethylpropandiol-1,3, Hexandiol-2,5, 1,4-Di-([beta]-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-[beta]-hydroxyethoxyphenyl)-propan und 2,2-Bis-(4-hydroxypropoxyphenyl)-propan (vgl. DE-OS 24 07 674, 24 07 776, 27 15 932), 1,4:3,6-Dianhydro-D-sorbitol (Isosorbid), und 2,4,8,10-tetraoxaspiro[5.5]undecane-3,9-diethanol sowie Mischungen aus mindestens zwei der vorstehenden Verbindungen.

Als Poly- oder Copolykondensate einer Terephthalsäure eignen sich in bevorzugten Ausführungsformen der Erfindung Polyalkylenterephthalate. Geeignete Polyalkylenterephthalate sind beispielsweise Reaktionsprodukte aus aromatischen Dicarbonsäuren oder ihren reaktionsfähigen Derivaten (z. B. Dimethylestern oder Anhydriden) und aliphatischen, cylcoaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen, cycloaliphatischen oder araliphatischen Diolen mit 2 bis 16 C-Atomen nach bekannten Methoden herstellen (Kunststoff-Handbuch, Bd. VIII, S. 695 ff, Karl-Hanser-Verlag, München 1973).

Bevorzugte Polyalkylenterephthalate enthalten mindestens 80 Mol-%, vorzugsweise 90 Mol-% Terephthalsäurereste, bezogen auf die Dicarbonsäurekomponente und ≥ 20 bis ≤ 80 Mol-%, vorzugsweise ≥ 25 bis ≤ 75 Mol-% und besonders bevorzugt ≥ 25 bis ≤ 70 Mol-% 1,4-Cyclohexandimethanol, 1,3-Cyclohexandimethanol und/oder 2,2,4,4-Tetramethyl-1,3-cyclobutandiol, vorzugsweise 1,4-Cyclohexandimethanol und/oder 1,3-Cyclohexandimethanol bezogen auf die Diolkomponente und ≥ 20 bis ≤ 80 mol-%, vorzugsweise ≥ 25 bis ≤ 75 mol-%, besonders bevorzugt ≥ 30 bis ≤ 75 Mol-% Ethylenglykol-, Diethylenglykol- und/oder 1,4-Butandiol, bezogen auf die Diolkomponente.

Die bevorzugten Polyalkylenterephthalate können durch Einbau relativ kleiner Mengen 3- oder 4-wertiger Alkohole oder 3- oder 4-basischer Carbonsäuren, wie sie z. B. in der DE-OS 19 00 270 und der US-PS 3 692 744 beschrieben sind, verzweigt werden. Beispiele bevorzugter Verzweigungsmittel sind Trimesinsäure, Trimellitsäure, Trimethylolethan und -propan und Pentaerythrit. Vorzugsweise wird nicht mehr als 1 Mol-% des Verzweigungsmittels, bezogen auf die Säure bzw. auf die Alkohol-Komponente verwendet.

Besonders bevorzugt sind Polyalkylenterephthalate, die allein aus Terephthalsäure und deren reaktionsfähigen Derivaten (z. B. deren Dialkylestern) und 1,4-Cyclohexandimethanol, 1,3-Cyclohexandimethanol, Ethylenglykol und/oder Butandiol-1,4 hergestellt worden sind, und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/ cyclohexandimethanol-1,4/butandiol-1,4)-terephthalate, Poly-(ethylenglykol/cyclohexan-dimethanol-1,4/ diethylengylcol)-terephthalate, Poly-(ethylenglykol/cyclohexan-dimethanol-1,4)-terephthalate und/oderPoly-(butandiol-1,4)-terephthalate.

Die als Komponente vorzugsweise verwendeten Polyalkylenterephthalate besitzen bevorzugt eine intrinsische Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

In bevorzugten Ausführungsformen der Erfindung handelt es sich bei dem Blend aus wenigstens einem oder mehreren Poly-oder Copolykondensat(en) einer aromatischen und/oder Cycloalkyl-Dicarbonsäure und aliphatischen, cycloaliphatischen und/oder araliphatischen Diolen mit 2 bis 16 Kohlenstoffatomen mit einem oder mehreren Poly- oder Copolycarbonat(en) um einen Blend aus wenigstens ein oder mehreren Poly- oder Copolykondensat(en) einer Terephthalsäure mit Poly-oder Copolycarbonat, mit der Maßgabe, dass der Anteil an Poly- oder Copolycarbonat(en) in diesem Blend in einem Bereich von ≥ 50 Gew.-% bis ≤ 90 Gew.-%, vorzugsweise einem Bereich von ≥ 60 Gew.-% bis ≤ 80 Gew.-% ganz besonders bevorzugt in einem Bereich von ≥ 60 Gew.-% bis ≤ 70 Gew.-% liegt, und dass das oder die Poly-oder Copolykondensat(e) der Terephthalsäure einen Anteil an 1,4-Cyclohexandimethanol, 1,3-Cyclohexandimethanol und/oder Tetramethyl-1,3-Cyclobutandiol, vorzugsweise 1,4-Cyclohexandimethanol und/oder 1,3-Cyclohexandimethanol, in einem Bereich von ≥ 20 bis ≤ 80 mol-%, vorzugsweise in einem Bereich von ≥ 25 bis ≤ 75 mol-% und besonders bevorzugt in einem Bereich von ≥ 25 bis ≤ 70 mol-%, bezogen auf die Diolkomponente aufweist.

In einer weiteren bevorzugten Ausführungsform der Erfindung handelt es sich bei dem Blend aus wenigstens einem oder mehreren Poly-oder Copolykondensat(en) einer aromatischen und/oder Cycloalkyl-Dicarbonsäure und aliphatischen, cycloaliphatischen und/oder araliphatischen Diolen mit 2 bis 16 Kohlenstoffatomen mit einem oder mehreren Poly- oder Copolycarbonat(en) um einen Blend aus wenigstens ein oder mehreren Poly- oder Copolykondensat(en) einer Terephthalsäure und Ethylenglykol-, Diethylenglykol- und/oder 1,4-Butandiol mit Poly-oder Copolycarbonat, mit der Maßgabe, dass der Anteil an Poly- oder Copolycarbonat(en) in diesem Blend in einem Bereich von ≥ 50 Gew.-% bis ≤ 90 Gew.-%, vorzugsweise einem Bereich von ≥ 60 Gew.-% bis ≤ 80 Gew.-% ganz besonders bevorzugt in einem Bereich von ≥ 60 Gew.-% bis ≤ 70 Gew.-% liegt, und dass das oder die Poly-oder Copolykondensat(e) der Terephthalsäure einen Anteil an 1,4-Cyclohexandimethanol, 1,3-Cyclohexandimethanol und/oder Tetramethyl-1,3-Cyclobutandiol, vorzugsweise 1,4-Cyclohexandimethanol und/oder 1,3-Cyclohexandimethanol in einem Bereich von ≥ 20 bis ≤ 80 mol-%, vorzugsweise in einem Bereich von ≥ 25 bis ≤ 75 mol-% und besonders bevorzugt in einem Bereich von ≥ 25 bis ≤ 70 mol-%, bezogen auf die Diolkomponente aufweist.

In einer besonders bevorzugten Ausführungsform der Erfindung handelt es sich bei dem Blend aus wenigstens einem oder mehreren Poly-oder Copolykondensat(en) einer aromatischen und/oder Cycloalkyl-Dicarbonsäure und aliphatischen, cycloaliphatischen und/oder araliphatischen Diolen mit 2 bis 16 Kohlenstoffatomen mit einem oder mehreren Poly- oder Copolycarbonat(en) um einen Blend aus Poly- oder Copolybutylenterephthalat und/oder glykol-modifiziertem Poly- oder Copolycyclohexandimethylenterephthalat, mit der Maßgabe, dass der Anteil an Poly- oder Copolycarbonat(en) in diesem Blend in einem Bereich von ≥ 50 Gew.-% bis ≤ 90 Gew.-%, vorzugsweise einem Bereich von ≥ 60 Gew.-% bis ≤ 80 Gew.-% ganz besonders bevorzugt in einem Bereich von ≥ 60 Gew.-% bis ≤ 70 Gew.-% liegt, und dass das oder die Poly-oder Copolyterephthalate einen Anteil an 1,4-Cyclohexandimethanol, 1,3-Cyclohexandimethanol und/oder Tetramethyl-1,3-Cyclobutandiol, vorzugsweise 1,4-Cyclohexandimethanol und/oder 1,3-Cyclohexandimethanol in einem Bereich von ≥ 20 bis ≤ 80 mol-%, vorzugsweise in einem Bereich von ≥ 25 bis ≤ 75 mol-% und besonders bevorzugt in einem Bereich von ≥ 25 bis ≤ 70 mol-%, bezogen auf die Diolkomponente aufweist.

In einer weiteren bevorzugten Ausführungsform der Erfindung handelt es sich bei dem Blend aus wenigstens einem oder mehreren Poly-oder Copolykondensat(en) einer aromatischen und/oder Cycloalkyl-Dicarbonsäure und aliphatischen, cycloaliphatischen und/oder araliphatischen Diolen mit 2 bis 16 Kohlenstoffatomen mit einem oder mehreren Poly- oder Copolycarbonat(en) um einen Blend aus Poly- oder Copolybutylenterephthalat und/oder glykol-modifiziertem Poly- oder Copolycyclohexandimethylenterephthalat mit Poly- oder Copolycarbonat um einen Blend aus ≥ 15 bis ≤ 40 Gew.-% glykol-modifiziertem Poly- oder Copolycyclohexandimethylenterephthalat, 0 bis ≤ 20 Gew.-% Poly- oder Copolybutylenterephthalat mit ≥ 60 Gew.-% bis ≤ 80 Gew.-% Poly- oder Copolycarbonat.

Als Poly- oder Copolycarbonate eignen sich in bevorzugten Ausführungsformen besonders aromatische Polycarbonate oder Copolycarbonate.

Die Polycarbonate oder Copolycarbonate können in bekannter Weise linear oder verzweigt sein.

Die Herstellung dieser Polycarbonate kann in bekannter Weise aus Diphenolen, Kohlensäurederivaten, gegebenenfalls Kettenabbrechern und gegebenenfalls Verzweigern erfolgen. Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P. R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Geeignete Diphenole können beispielsweise Dihydroxyarylverbindungen der allgemeinen Formel (I) sein,

HO-Z-OH (I)

worin Z ein aromatischer Rest mit 6 bis 34 C-Atomen ist, der einen oder mehrere gegebenenfalls substituierte aromatische Kerne und aliphatische oder cycloaliphatische Reste bzw. Alkylaryle oder Heteroatome als Brückenglieder enthalten kann.

Beispiele für geeignete Dihydroxyarylverbindungen sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole, sowie deren kemalkylierte und kernhalogenierte Verbindungen.

Diese und weitere geeignete andere Dihydroxyarylverbindungen sind z.B. in DE-A 3 832 396, FR-A 1 561 518, in H. Schnell, Chemistry and Physics of Polycarbonates, Interscience Publishers, New York 1964, S. 28 ff.; S.102 ff. und in D.G. Legrand, J.T. Bendler, Handbook of Polycarbonate Science and Technology, Marcel Dekker New York 2000, S. 72 ff. beschrieben.

Bevorzugte Dihydroxyarylverbindungen sind beispielsweise Resorcin, 4,4'-Dihydroxydiphenyl, Bis-(4-hydroxyphenyl)-methan, Bis-(3,5-dimethyl-4-hydroxyphenyl)-methan, Bis-(4-hydroxyphenyl)-diphenyl-methan, 1,1-Bis-(4-hydroxyphenyl)-1-phenyl-ethan, 1,1-Bis-(4-hydroxyphenyl)-1-(1-naphthyl)-ethan, 1,1-Bis-(4-hydroxyphenyl)-1-(2-naphthyl)-ethan, 2,2-Bis-(4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-1-phenyl-propan, 2,2-Bis-(4-hydroxyphenyl)-hexafluor-propan, 2,4-Bis-(4-hydroxyphenyl)-2-methyl-butan, 2,4-Bis-(3,5-dimethyl-4-hydroxyphenyl)-2-methylbutan, 1,1-Bis-(4-hydroxyphenyl)-cyclohexan, 1,1-Bis-(3,5-dimethyl-4-hydroxyphenyl)-cylohexan, 1,1-Bis-(4-hydroxyphenyl)-4-methyl-cylohexan, 1,3-Bis-[2-(4-hydroxyphenyl)-2-propyl]-benzol, 1,1'-Bis-(4-hydroxyphenyl)-3-diisopropyl-benzol, 1,1'-Bis-(4-hydroxyphenyl)-4-diisopropyl-benzol, 1,3-Bis-[2-(3,5-dimethyl-4-hydroxyphenyl)-2-propyl]-benzol, Bis-(4-hydroxyphenyl)-ether, Bis-(4-hydroxyphenyl)-sulfid, Bis-(4-hydroxyphenyl)-sulfon, Bis-(3,5-dimethyl-4-hydroxyphenyl)-sulfon und 2,2',3,3'-Tetrahydro-3,3,3',3'-tetramethyl-1,1'-spirobi-[1H-inden]-5,5'-diol oder

Dihydroxydiphenylcycloalkane der Formel (Ia) 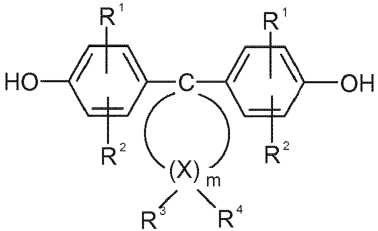 (Ia)
worin
R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
m eine ganze Zahl von 4 bis 7, bevorzugt 4 oder 5,
R³ und R⁴ für jedes X individuell wählbar, unabhängig voneinander Wasserstoff oder C₁-C₆-Alkyl und
X Kohlenstoff bedeuten, mit der Maßgabe, dass an mindestens einem Atom X, R³ und R⁴ gleichzeitig Alkyl bedeuten. Bevorzugt sind in der Formel (Ia) an einem oder zwei Atom(en) X, insbesondere nur an einem Atom X R³ und R⁴ gleichzeitig Alkyl.

Bevorzugter Alkylrest für die Reste R³ und R⁴ in Formel (Ia) ist Methyl. Die X-Atome in alpha - Stellung zu dem Diphenylsubstituierten C-Atom (C-1) sind bevorzugt nicht dialkylsubstituiert, dagegen ist die Alkyldisubstitution in beta-Stellung zu C-1 bevorzugt.

Besonders bevorzugte Dihydroxydiphenylcycloalkane der Formenl (Ia) sind solche mit 5 und 6 Ring-C-Atomen X im cycloaliphatischen Rest (m = 4 oder 5 in Formel (Ia)), beispielsweise die Diphenole der Formeln (Ia-1) bis (Ia-3),

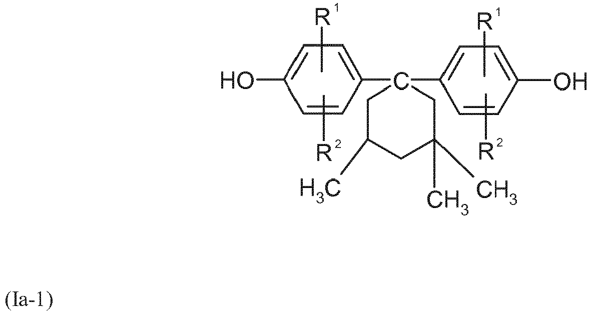

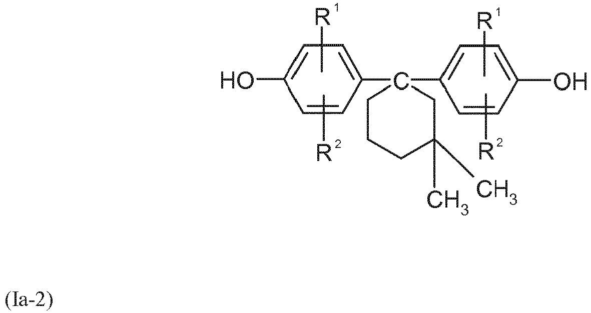

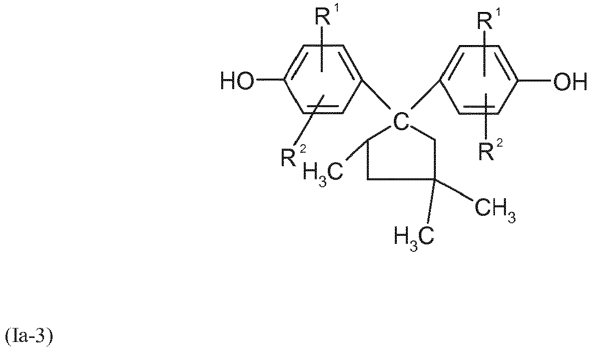

Ein ganz besonders bevorzugtes Dihydroxydiphenylcycloalkane der Formenl (Ia) ist 1,1-Bis-(4-hydroxyphenyl)-3,3,5-trimethyl-cyclohexan (Formel (Ia-1) mit R¹ und R² gleich H).

Solche Polycarbonate können gemäss der EP-A 359 953 aus Dihydroxydiphenylcycloalkanen der Formel (Ia) hergestellt werden.

Besonders bevorzugte Dihydroxyarylverbindungen sind Resorcin, 4,4'-Dihydroxydiphenyl, Bis-(4-hydroxyphenyl)-diphenyl-methan, 1,1-Bis-(4-hydroxyphenyl)-1-phenyl-ethan, Bis-(4-hydroxyphenyl)-1-(1-naphthyl)-ethan, Bis-(4-hydroxyphenyl)-1-(2-naphthyl)-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan, 1,1-Bis-(3,5-dimethyl-4-hydroxyphenyl)-cyclohexan, 1,1-Bis-(4-hydroxyphenyl)-3,3,5-trimethyl-cyclohexan, 1,1'-Bis-(4-hydroxyphenyl)-3-diisopropyl-benzol und 1,1'- Bis-(4-hydroxyphenyl)-4-diisopropyl-benzol.

Ganz besonders bevorzugte Dihydroxyarylverbindungen sind 4,4'-Dihydroxydiphenyl und 2,2-Bis-(4-hydroxyphenyl)-propan.

Es können sowohl eine Dihydroxyarylverbindung unter Bildung von Homopolycarbonaten als auch verschiedene Dihydroxyarylverbindungen unter Bildung von Copolycarbonaten verwendet werden. Es können sowohl eine Dihydroxyarylverbindung der Formel (I) oder (Ia) unter Bildung von Homopolycarbonaten als auch mehrere eine Dihydroxyarylverbindungen der Formel (I) und/oder (Ia) unter Bildung von Copolycarbonaten verwendet werden. Dabei können die verschiedenen Dihydroxyarylverbindungen sowohl statistisch als auch blockweise miteinander verknüpft sein. Im Falle von Copolycarbonaten aus Dihydroxyarylverbindungen der Formel (I) und (Ia), beträgt das molare Verhältnis von Dihydroxyarylverbindungen der Formel (Ia) zu den gegebenenfalls mitzuverwendenden anderen Dihydroxyarylverbindungen der Formel (I) vorzugsweise zwischen 99 Mol-% (Ia) zu 1 Mol-% (I) und 2 Mol-% (Ia) zu 98 Mol-% (I), vorzugsweise zwischen 99 Mol-% (Ia) zu 1 Mol-% (I) und 10 Mol-% (Ia) zu 90 Mol-% (I) und insbesondere zwischen 99 Mol-% (Ia) zu 1 Mol-% (I) und 30 Mol-% (Ia) zu 70 Mol-% (I).

Ein ganz besonders bevorzugtes Copolycarbonat kann unter Verwendung von 1,1-Bis-(4-hydroxyphenyl)-3,3,5-trimethyl-cyclohexan und 2,2-Bis-(4-hydroxyphenyl)-propan Dihydroxyarylverbindungen der Formel (Ia) und (I) hergestellt werden.

Geeignete Kohlensäurederivate können beispielsweise Diarylcarbonate der allgemeinen Formel (II) sein, 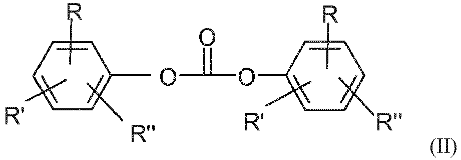 worin
R, R' und R" unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen, R weiterhin auch -COO-R''' bedeuten kann, wobei R''' für Wasserstoff, lineares oder verzweigtes C₁-C₃₄-Alkyl, C₇-C₃₄-Alkylaryl oder C₆-C₃₄-Aryl steht.

Bevorzugte Diarylcarbonate sind beispielsweise Diphenylcarbonat, Methylphenyl-phenylcarbonate und Di-(methylphenyl)-carbonate, 4-Ethylphenyl-phenyl-carbonat, Di-(4-ethylphenyl)-carbonat, 4-n-Propylphenyl-phenyl-carbonat, Di-(4-n-propylphenyl)-carbonat, 4-iso-Propylphenyl-phenyl-carbonat, Di-(4-iso-propylphenyl)-carbonat, 4-n-Butylphenyl-phenyl-carbonat, Di-(4-n-butylphenyl)-carbonat, 4-iso-Butylphenyl-phenyl-carbonat, Di-(4-iso-butylphenyl)-carbonat, 4-tert-Butylphenyl-phenyl-carbonat, Di-(4-tert-butylphenyl)-carbonat, 4-n-Pentylphenyl-phenyl-carbonat, Di-(4-n-pentylphenyl)-carbonat, 4-n-Hexylphenyl-phenyl-carbonat, Di-(4-n-hexylphenyl)-carbonat, 4-iso-Octylphenyl-phenyl-carbonat, Di-(4-iso-octylphenyl)-carbonat, 4-n-Nonylphenyl-phenyl-carbonat, Di-(4-n-nonylphenyl)-carbonat, 4-Cyclohexylphenyl-phenyl-carbonat, Di-(4-cyclohexylphenyl)-carbonat, 4-(1-Methyl-1-phenylethyl)-phenyl-phenyl-carbonat, Di-[4-(1-methyl-1-phenylethyl)-phenyl]-carbonat, Biphenyl-4-yl-phenyl-carbonat, Di-(biphenyl-4-yl)-carbonat, 4-(1-Naphthyl)-phenyl-phenyl-carbonat, 4-(2-Naphthyl)-phenyl-phenyl-carbonat, Di-[4-(1-naphthyl)-phenyl]-carbonat, Di-[4-(2-naphthyl)phenyl]-carbonat, 4-Phenoxyphenyl-phenyl-carbonat, Di-(4-phenoxyphenyl)-carbonat, 3-Pentadecylphenyl-phenyl-carbonat, Di-(3-pentadecylphenyl)-carbonat, 4-Tritylphenyl-phenyl-carbonat, Di-(4-tritylphenyl)-carbonat, Methylsalicylat-phenyl-carbonat, Di-(methylsalicylat)-carbonat, Ethylsalicylat-phenyl-carbonat, Di-(ethylsalicylat)-carbonat, n-Propylsalicylat-phenyl-carbonat, Di-(n-propylsalicylat)-carbonat, iso-Propylsalicylat-phenyl-carbonat, Di-(iso-propylsalicylat)-carbonat, n-Butylsalicylat-phenyl-carbonat, Di-(n-butylsalicylat)-carbonat, iso-Butylsalicylat-phenyl-carbonat, Di-(iso-butylsalicylat)-carbonat, tert-Butylsalicylat-phenyl-carbonat, Di-(tert-butylsalicylat)-carbonat, Di-(phenylsalicylat)-carbonat und Di-(benzylsalicylat)-carbonat.

Besonders bevorzugte Diarylverbindungen sind Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di-[4-(1-methyl-1-phenylethyl)-phenyl]-carbonat und Di-(methylsalicylat)-carbonat.

Ganz besonders bevorzugt ist Diphenylcarbonat.

Es können sowohl ein Diarylcarbonat als auch verschiedene Diarylcarbonate verwendet werden.

Zur Steuerung bzw. Veränderung der Endgruppen können zusätzlich beispielsweise eine oder mehrere Monohydroxyarylverbindung(en) als Kettenabbrecher eingesetzt werden, die nicht zur Herstellung des oder der verwendeten Diarylcarbonat(e) verwendet wurde(n). Dabei kann es sich um solche der allgemeinen Formel (III) handeln, 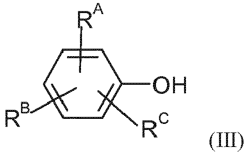 wobei
R^{A} für lineares oder verzweigtes C₁-C₃₄-Alkyl, C₇-C₃₄-Alkylaryl, C₆-C₃₄-Aryl oder für -COO-R^{D} steht, wobei R^{D} für Wasserstoff, lineares oder verzweigtes C₁-C₃₄-Alkyl, C₇-C₃₄-Alkylaryl oder C₆-C₃₄-Aryl steht, und
R^{B}, R^{C} unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen.

Solche Monohydroxyarylverbindungen sind beispielsweise 1-, 2- oder 3-Methylphenol, 2,4-Dimethylphenol 4-Ethylphenol, 4-n-Propylphenol, 4-iso-Propylphenol, 4-n-Butylphenol, 4-isoButylphenol, 4-tert-Butylphenol, 4-n-Pentylphenol, 4-n-Hexylphenol, 4-iso-Octylphenol, 4-n-Nonylphenol, 3-Pentadecylphenol, 4-Cyclohexylphenol, 4-(1-Methyl-1-phenylethyl)-phenol, 4-Phenylphenol, 4-Phenoxyphenol, 4-(1-Naphthyl)-phenol, 4-(2-Naphthyl)-phenol, 4-Tritylphenol, Methylsalicylat, Ethylsalicylat, n-Propylsalicylat, iso-Propylsalicylat, n-Butylsalicylat, iso-Butylsalicylat, tert-Butylsalicylat, Phenylsalicylat und Benzylsalicylat.

Bevorzugt sind 4-tert-Butylphenol, 4-iso-Octylphenol und 3-Pentadecylphenol.

Geeignete Verzweiger können Verbindungen mit drei und mehr funktionellen Gruppen, vorzugsweise solche mit drei oder mehr Hydroxylgruppen.

Geeignete Verbindungen mit drei oder mehr phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol und Tetra-(4-hydroxyphenyl)-methan.

Sonstige geeignete Verbindungen mit drei und mehr funktionellen Gruppen sind beispielsweise 2,4-Dihydroxybenzoesäure, Trimesinsäure(trichlorid), Cyanursäuretrichlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

In einer bevorzugten Ausführungsform der Erfindung umfasst die Folie eine weitere Schicht (ii), wobei diese weitere Schicht (ii) ein oder mehrere Poly-oder Copolykondensat(e) einer aromatischen und/oder Cycloalkyl-Dicarbonsäure und aliphatischen, cycloaliphatischen und/oder araliphatischen Diolen mit 2 bis 16 Kohlenstoffatomen umfasst.

Die Poly- oder Copolykondensate einer aromatischen und/oder Cycloalkyl-Dicarbonsäure und aliphatischen, cycloaliphatischen und/oder araliphatischen Diolen mit 2 bis 16 Kohlenstoffatomen lassen sich nach bekannten Methoden aus der entsprechenden Dicarbonsäure (oder ihren reaktionsfähigen Derivaten) und aliphatischen, cycloaliphatischen und/oder araliphatischen Diolen mit 2 bis 16 C-Atomen herstellen (Kunststoff-Handbuch Bd. VIII, S. 695 ff, Karl-Hanser-Verlag, München 1973).

Als Dicarbonsäure des Poly- oder Copolykondensats kann wenigstens eine Verbindung aus der Gruppe Orthophthalsäure, Terephthalsäure, Isophthalsäure, tert-Butylisophthalsäure, 3,3'-Diphenyl-dicarbonsäure, 4,4'-Diphenyldicarbonsäure, 4,4-Benzophenondicarbonsäure, 3,4'-Benzophenon-dicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure, Naphthalin-1,4-dicarbonsäure, Naphthalin-1,5-dicarbonsäure, Naphthalin-2,6-dicarbonsäure und /oder Cyclohexandicarbonsäure oder die reaktionsfähigen Derivate der genannten Dicarbonsäuren, vorzugsweise Terephthalsäure, Naphthalin-1,4-dicarbonsäure, Naphthalin-1,5-dicarbonsäure, Naphthalin-2,6-dicarbonsäure und/oder Isophathalsäure oder die reaktionsfähigen Derivate der genannten Dicarbonsäuren, besonders bevorzugt Terephthalsäure und/oder Isophthalsäure oder deren reaktionsfährigen Derivate und ganz besonders bevorzugt Terephthalsäure oder ein reaktionsfähiges Derivat der Terephthalsäure eingesetzt werden.

Die Säurekomponente des Poly-oder Copolykondensats kann neben den vorstehend genannten Dicarbonsäuren noch bis zu 20 Mol-% andere aromatische Dicarbonsäuren mit 8 bis 14 C-Atomen oder aliphatische Dicarbonsäuren mit 4 bis 12 C-Atomen enthalten, wie beispielsweise Phthalsäure, Isophthalsäure, Naphthalin-2,6-dicarbonsäure, 4,4'-Diphenyldicarbonsäure, Bernstein-, Adipin-, Sebacinsäure, Malonsäure, Glutarsäure, Dodecandicarbonsäure, Korksäure, Pimelinsäure, Azelainsäure, Cyclohexandiessigsäure.

Als Diolkomponente des Poly- oder Copolykondensats können aliphatische, cycloaliphatische oder araliphatische Diole mit 2 bis 16 C-Atomen eingesetzt werden, wie beispielsweise Ethylenglykol, Diethylenglycol, 1,2-Propandiol, 1, 3-Propandiol, Neopentylglykol, 1,4-Butandiol, 1,5-Pentandiol, 1,6-Hexandiol, p-Xyloldiol und Mischungen aus mindestens zwei der vorstehenden Verbindungen, vorzugsweise Etyhlengylkol, Diethylengylkol, 1, 4-Butandiol sowie Mischungen aus mindestens zwei der vorstehenden Verbindungen.

Die Diolkomponente kann noch bis zu 10 Mol-% andere aliphatischer Diole mit 3 bis 12 C-Atomen oder cycloaliphatischer Diole mit 6 bis 21 C-Atomen enthalten, wie beispielsweise 2-Ethylpropandiol-1,3, 3-Methylpentandiol-2,4, 2-Methylpentandiol-2,4, 2,2,4-Trimethylpentandiol-1,3 und 2-Ethylhexandiol-1,6, 2,2-Diethylpropandiol-1,3, Hexandiol-2,5, 1,4-Di-([beta]-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-[beta]-hydroxyethoxyphenyl)-propan und 2,2-Bis-(4-hydroxypropoxyphenyl)-propan (vgl. DE-OS 24 07 674, 24 07 776, 27 15 932), 1,4:3,6-Dianhydro-D-sorbitol (Isosorbid), und 2,4,8,10-tetraoxaspiro[5.5]undecane-3,9-diethanol sowie Mischungen aus mindestens zwei der vorstehenden Verbindungen.

Als Poly- oder Copolykondensate einer aromatischen und/oder Cycloalkyl-Dicarbonsäure und aliphatischen, cycloaliphatischen und/oder araliphatischen Diolen können beispielsweise Poly-oder Copolyethylenterephthalat (PET oder CoPET), glycol-modifiziertes PET (PETG), glycol-modifiziertes Poly- oder Copolycyclohexandimethylenterephthalat (PCTG) oder Poly- oder Copolybutylenterephthalat (PBT oder CoPBT), Polyethylenglykolnaphthalat (PEN), Polycyclohexandimethanolcyclohexandicarbonsäure (PCCD) und/oder Mischungen aus mindestens zwei der vorstehenden Verbindungen eingesetzt werden.

Ganz besonders bevorzugt umfasst die weitere Schicht (ii) ein oder mehrere Poly-oder Copolycon-densat(e) einer Terephthalsäure, wie beispielhaft und vorzugsweise Poly- oder Copolyethylenterephthalat (PET oder CoPET), glycol-modifiziertes PET (PETG), glycol-modifiziertes Poly- oder Copolycyclohexandimethylenterephthalat (PCTG) oder Poly- oder Copolybutylenterephthalat (PBT oder CoPBT). In einer bevorzugten Ausführungsform, ist die Schicht (ii) frei von Poly- und/oder Copolycarbonaten.

In einer bevorzugten Ausführungsform umfasst die weitere Schicht (ii) einen Anteil an 1,4-Cyclohexandimethanol, 1,3-Cyclohexandimethanol und/oder 2,2,4,4-Tetramethyl-1,3-butandiol, vorzugsweise 1,4-Cyclohexandimethanol und/oder 1,3-Cyclohexandimethanol, in einem Bereich von ≥ 20 bis ≤ 80 mol-%, vorzugsweise in einem Bereich von ≥ 25 bis ≤ 75 mol-% und besonders bevorzugt in einem Bereich von ≥ 25 bis ≤ 70 mol-%, bezogen auf die Diolkomponente des einen oder mehreren Poly- oder Copolykondesat(s) einer aromatischen und/oder Cycloalkyl-Dicarbonsäure und aliphatischen, cycloaliphatischen und/oder araliphatischen Diolen mit 2 bis 16 Kohlenstoffatomen.

In einer weiteren vorteilhaften Ausführungsform der Erfindung umfasst diese weitere Schicht (ii) ein oder mehrere Poly-oder Copolycondensat(e) einer Terephthalsäure, wie beispielhaft und vorzugsweise Poly- oder Copolyethylenterephthalat (PET oder CoPET), glycol-modifiziertes PET (PETG), glycol-modifiziertes Poly- oder Copolycyclohexandimethylenterephthalat (PCTG) oder Poly- oder Copolybutylenterephthalat (PBT oder CoPBT), wobei das oder die Poly- oder Copolykondesate einer Terephthalsäure einen Anteil an 1,4-Cyclohexandimethanol, 1,3-Cyclohexandimethanol und/oder 2,2,4,4-Tetramethyl-1,3-butandiol, vorzugsweise 1,4-Cyclohexandimethanol und/oder 1,3-Cyclohexandimethanol, in einem Bereich von ≥ 20 bis ≤ 80 mol-%, vorzugsweise in einem Bereich von ≥ 25 bis ≤ 75 mol-% und besonders bevorzugt in einem Bereich von ≥ 25 bis ≤ 70 mol-%, bezogen auf die Diolkomponente, aufweist.

In einer weiteren Ausführungsform der Erfindung umfasst die Folie eine dritte Schicht (iii), wobei diese dritte Schicht (iii) ein oder mehrere Poly-oder Copolykondensat(e) einer aromatischen und/oder Cycloalkyl-Dicarbonsäure und aliphatischen, cycloaliphatischen und/oder araliphatischen Diolen mit 2 bis 16 Kohlenstoffatome umfasst und wobei die Schichten (i), (ii) und (iii) so angeordnet sind, dass die beiden Schichten (ii) und (iii) die äußeren Schichten der Folie bilden.

In einer weiteren bevorzugten Ausführungsform umfasst die weitere Schicht (ii) und/oder die Schicht (iii) einen Anteil an 1,4-Cyclohexandimethanol, 1,3-Cyclohexandimethanol und/oder 2,2,4,4-Tetramethyl-1,3-butandiol, vorzugsweise 1,4-Cyclohexandimethanol und/oder 1,3-Cyclohexandimethanol, in einem Bereich von ≥ 20 bis ≤ 80 mol-%, vorzugsweise in einem Bereich von ≥ 25 bis ≤ 75 mol-% und besonders bevorzugt in einem Bereich von ≥ 25 bis ≤ 70 mol-%, bezogen auf die Diolkomponente des einen oder mehreren Poly- oder Copolykondesat(s) einer aromatischen und/oder Cycloalkyl-Dicarbonsäure und aliphatischen, cycloaliphatischen und/oder araliphatischen Diolen mit 2 bis 16 Kohlenstoffatomen.

Für die Beschreibung des oder der Poly- oder Copolykondensate einer aromatischen und/oder Cycloalkyl-Dicarbonsäure und aliphatischen, cycloaliphatischen und/oder araliphatischen Diolen mit 2 bis 16 Kohlenstoffatome der Schicht (iii) wird auf die Beschreibung der Poly- oder Copolykondensate einer aromatischen und/oder Cycloalkyl-Dicarbonsäure und aliphatischen, cycloaliphatischen und/oder araliphatischen Diolen mit 2 bis 16 Kohlenstoffatome für die Schicht (ii) verwiesen um unnötige Wiederholungen zu vermeiden.

In einer bevorzugten Ausführungsform, ist die Schicht (ii) und/oder die Schicht (iii) frei von Poly- und/oder Copolycarbonaten, ganz besonders bevorzugt ist die Schicht (ii) und die Schicht (iii) frei von Poly-und/oder Copolycarbonaten.

Die beiden äußeren Schichten (ii) und (iii) können hinsichtlich des Poly-oder Copolykondesate gleich oder verschieden sein, vorzugsweise sind die Poly- oder Copolykondensate der beiden äußeren Schichten (ii) und (iii) gleich.

In einer weiteren Ausführungsform der Erfindung sind die äußeren Schichten (ii) und (iii) gleich in Hinblick auf Dicke und Material.

Die erfindungsgemäße Folie kann eine Gesamtschichtdicke im Bereich von ≥ 30 bis ≤ 145 µm, vorzugsweise im Bereich von ≥ 40 bis ≤ 120 µm, ganz besonders bevorzugt im Bereich von ≥ 40 bis ≤ 110 µm aufweisen.

In einer Ausführungsform der Erfindung, in der die Folie wenigstens eine Schicht (i) und eine weitere Schicht (ii) umfasst, weist die Schicht (i) eine Schichtdicke in einem Bereich von ≥ 20 bis ≤ 135 µm, vorzugsweise im Bereich von ≥ 30 bis ≤ 110 µm, ganz besonders bevorzugt im Bereich von ≥ 30 bis ≤100 µm auf.

In einer anderen Ausführungsform der Erfindung, in der die Folie wenigstens eine Schicht (i) und zwei äußere Schichten (ii) und (iii) umfasst, weist die Schicht (i) eine Schichtdicke im Bereich von ≥ 15 bis ≤ 120 µm, vorzugsweise im Bereich von ≥ 20 bis ≤ 100 µm, ganz besonders bevorzugt im Bereich von ≥ 20 bis ≤90 µm auf.

Wenigstens eine Schicht (i), (ii) und/oder (iii) der erfindungsgemäßen Folie kann zudem wenigstens einen Füllstoff aufweisen. Bei dem Füllstoff handelt es sich bevorzugt um wenigstens ein Farbpigment und/oder wenigstens einen sonstigen Füllstoff zur Erzeugung einer Transluzenz der gefüllten Schichten, besonders bevorzugt um ein Weißpigment, ganz besonders bevorzugt um Titandioxid, Zirkoniumdioxid oder Bariumsulfat, in einer bevorzugten Ausführungsform um Titandioxid.

Das Füllen wenigstens einer Schicht der erfindungsgemäßen Folie mit wenigstens einem solchen Füllstoff verbessert die Sichtbarkeit der eingebrachten Beschriftung bzw. Abbildung(en), wodurch auch die Wahrnehmung der verbesserten Schärfe und Auflösung weiter erhöht wird.

Die genannten Füllstoffe werden vorzugsweise in Mengen von 2 bis 45 Gew.-%, besonders bevorzugt von 5 bis 30 Gew.-%, bezogen auf das Gesamtgewicht der Schicht, die den Füllstoff enthält, welche zum Beispiel durch Extrusion oder Coextrusion erfolgen kann, zugegeben.

In einer Ausführungsform der Erfindung umfasst die Schicht (i) und/oder die Schicht (ii) einen Füllstoff.

In einer anderen Ausführungsform der Erfindung umfasst die Schicht (i) einen Füllstoff und die Schichten (ii) und (iii) sind frei von Füllstoffen.

Die erfindungsgemäße Folie umfassend wenigstens eine Schicht (i) und eine weitere Schicht (ii) und gegebenenfalls eine dritte Schicht (iii) kann beispielsweise und bevorzugt mittels Coextrusion der enthaltenen Schichten, Lamination der enthaltenen Schichten oder Extrusionslamination, d.h. Aufextrudieren der Schicht(en) enthaltend wenigstens eine Schicht (i) und eine weitere Schicht (ii) und gegebenenfalls eine dritte Schicht (iii) hergestellt werden. Bevorzugt sind die Varianten der Coextrusion und des Aufextrudierens. Ganz besonders bevorzugt ist die Herstellung mittels Coextrusion.

Eine solche mittels Coextrusion hergestellte Folie stellt eine besonders bevorzugte Ausführungsform der erfindungsgemäßen Folie dar und ist ebenfalls Gegenstand der Erfindung.

Gegenstand der vorliegenden Erfindung ist demnach eine Coextrusionsfolie umfassend
wenigstens eine Schicht (i) enthaltend mindestens einen Blend aus wenigstens einem oder mehreren Poly-oder Copolykondensat(en) einer aromatischen und/oder Cycloalkyl-Dicarbonsäure und aliphatischen, cycloaliphatischen und/oder araliphatischen Diolen mit 2 bis 16 Kohlenstoffatomen mit einem oder mehreren Poly- oder Copolycarbonat(en), dadurch gekennzeichnet, dass der Anteil an Poly- oder Copolycarbonat(en) in diesem Blend in einem Bereich von ≥ 50 Gew.-% bis ≤ 90 Gew.-%, vorzugsweise einem Bereich von ≥ 60 Gew.-% bis ≤ 80 Gew.-% ganz besonders bevorzugt in einem Bereich von ≥ 60 Gew.-% bis ≤ 70 Gew.-% liegt, und dass das oder die Poly-oder Copolykondensat(e) einer aromatischen und/oder Cycloalkyl-Dicarbonsäure und aliphatischen, cycloaliphatischen und/oder araliphatischen Diolen mit 2 bis 16 Kohlenstoffatomen einen Anteil an 1,4-Cyclohexandimethanol, 1,3-Cyclohexandimethanol und/oder 2,2,4,4-Tetramethyl-1,3-cyclobutandiol in einem Bereich von ≥ 20 bis ≤ 80 mol-%, vorzugsweise in einem Bereich von ≥ 25 bis ≤ 75 mol-% und besonders bevorzugt in einem Bereich von ≥ 25 bis ≤ 70 mol-%, bezogen auf die Diolkomponente aufweisen. wenigstens einem oder mehreren Poly-oder Copolykondensat(en) einer aromatischen und/oder Cycloalkyl-Dicarbonsäure und aliphatischen, cycloaliphatischen und/oder araliphatischen Diolen mit 2 bis 16 Kohlenstoffatomen mit einem oder mehreren Poly- oder Copolycarbonat(en), dadurch gekennzeichnet, dass der Anteil an Poly- oder Copolycarbonat(en) in diesem Blend in einem Bereich von ≥ 50 Gew.-% und bis ≤ 90 Gew.-%, vorzugsweisen einem Bereich von ≥ 60 Gew.-% und bis ≤ 80 Gew.-% ganz besonders bevorzugt in einem Bereich von ≥ 60 Gew.-% bis ≤ 70 Gew.-% liegt, und dass das oder die Poly-oder Copolykondensat(e) einer aromatischen und/oder Cycloalkyl-Dicarbonsäure und aliphatischen, cycloaliphatischen und/oder araliphatischen Diolen mit 2 bis 16 Kohlenstoffatomen einen Anteil an 1,4-Cyclohexandimethanol, 1,3-Cyclohexandimethanol und/oder 2,2,4,4-Tetramethyl-1,3-cyclobutandiol in einem Bereich von 30 bis 80 mol-%, vorzugsweise in einem Bereich von 30 bis 75 mol-% und besonders bevorzugt in einem Bereich von 32 bis 68 mol-% bezogen auf die Diolkomponente, aufweisen, und
eine weitere Schicht (ii), wobei diese weitere Schicht ein oder mehrere Poly-oder Copolycondensat(e) einer aromatischen und/oder Cycloalkyl-Dicarbonsäure und aliphatischen, cycloaliphatischen und/oder araliphatischen Diolen mit 2 bis 16 Kohlenstoffatomen enthält.

In einer weiteren Ausführungsform enthält die erfindungsgemäße Coextrusionsfolie eine dritte Schicht (iii), wobei diese dritte Schicht ein oder mehrere Poly-oder Copolycondensat(e) einer aromatischen und/oder Cycloalkyl-Dicarbonsäure und aliphatischen, cycloaliphatischen und/oder araliphatischen Diolen mit 2 bis 16 Kohlenstoffatomen umfasst und die Schichten so angeordnet sind, dass die beiden Schichten (ii) und (iii) die äußeren Schichten der Folie bilden.

Eine bevorzugte Ausführungsform ist eine wenigstens dreischichtige Coextrusionsfolie umfassend wenigstens die Schichten (i), (ii) und (iii), wobei die Schichten so angeordnet sind, dass die Schichten (ii) und (iii) die äußeren Schichten der Folie bilden.

In einer anderen bevorzugten Ausführungsform der erfindungsgemäßen Coextrusionsfolie ist die Schicht (ii) und/oder die Schicht (iii) frei von Poly- und/oder Copolycarbonat.

Das vorangehend für die erfindungsgemäße Folie genannte, einschließlich der aufgeführten Schichtdicken, Bestandteile und Vorzugsbereiche gilt für die erfindungsgemäße Coextrusionsfolie analog.

Die erfindungsgemäße Folie und damit auch die erfindungsgemäße Coextrusionsfolie eignet sich hervorragend als Bestandteil für Sicherheitsdokumente, bevorzugt Identifikationsdokumente und/oder Bankkarten, welche mittels Lasergravur beschriftet werden sollen. Bei Verwendung der erfindungsgemäßen Folien erreicht man eine hohe Schärfe und eine hohe Qualität der mittels Lasergravur aufgebrachten Elemente. Mittels Lasergravur lassen sich vorzugsweise personalisierende Schriftzüge und/oder Abbildungen. Ganz besonders bevorzugt eignet sich der erfindungsgemäße Schichtaufbau für Identifikationsdokumente in Form verklebter oder laminierter Schichtverbunde in Form von Kunststoffkarten, wie z.B. Personalausweisen, Reisepässen, Führerscheinen, Kreditkarten, Bankkarten, Karten für die Zugangskontrolle oder sonstigen Ausweisdokumenten etc.. Bevorzugte Identifikationsdokumente sind im Rahmen der vorliegenden Erfindung mehrschichtige flächenförmige Dokumente mit Sicherheitsmerkmalen wie Chips, Fotografien, biometrischen Daten etc. Diese Sicherheitsmerkmale können von außen sichtbar oder zumindest abfragbar sein. Vorzugsweise hat ein solches Identifikationsdokument eine Größe zwischen der einer Scheckkarte und der eines Reisepasses. Ein solches Identifikationsdokument kann auch Teil eines Dokumentes aus mehreren Teilen sein, wie z.B. ein Identifikationsdokument aus Kunststoff in einem Reisepass, der auch Papier- oder Pappanteile enthält.

Die erfindungsgemäße Folie und auch die erfindungsgemäße Coextrusionsfolie zeigen eine gute Haftung der einzelnen Folien in Schichtaufbauten wie beispielsweise in Sicherheitsdokumenten bei einer geringen Laminationstemperatur.

Weiterhin weisen die erfindungsgemäßen Folien insbesondere als Bestandteil in Sicherheitsdokumenten, bevorzugt Identifikationsdokumenten und/oder Bankkarten eine sehr gute Chemikalienbeständigkeit, insbesondere gegen Aceton und künstlichem Hautfett auf. Die Haltbarkeit von Sicherheitsdokumenten, in denen die erfindungsgemäße Folie enthalten ist, ist im Vergleich zu herkömmlichen Karten besser, was sich im Wechselbiegetest zeigt.

Weiterhin Gegenstand der Erfindung ist demnach ein Sicherheitsdokument, bevorzugt ein Identifikationsdokument und/oder eine Bankkarte enthaltend wenigstens eine erfindungsgemäße Folie.

Das erfindungsgemäße Sicherheitsdokument, bevorzugt Identifikationsdokument kann weitere zusätzliche Schichten aufweisen, über die beispielsweise weitere Informationen in das Sicherheitsdokument, bevorzugt Identifikationsdokument und/oder Bankkarte eingebracht werden.

Bei solchen weiteren Informationen kann es sich beispielsweise um personalisierende Porträts oder nicht personalisierende allgemeine Informationen handeln, die beispielsweise in jedem gattungsgleichen Sicherheitsdokument, bevorzugt Identifikationsdokument und/oder Bankkarte in gleicher Form enthalten sind.

Solche Schichten können beispielsweise aus vorher mittels herkömmlicher Druckverfahren, vorzugsweise Ink-Jet- oder Laserdruck, besonders bevorzugt Farbdruck mit diesen Informationen bestückten Folien in das Sicherheitsdokument, bevorzugt Identifikationsdokument und/oder Banckarte eingebracht werden.

Mittels Ink-Jet-Druckverfahren bedruckbare Folien sind dem Fachmann an sich bekannt und können beispielsweise solche erfindungsgemäße Folien sein. In besonders bevorzugten Ausführungsformen werden zur besseren Sichtbarkeit der aufgedruckten Informationen mittels Füllstoffen wie z.B. Titandioxid, Zirkoniumdioxid, Bariumsulfat etc. weiß oder transluzent eingefärbte Kunststoff-Folien verwendet.

Für mittels Laserdruck, insbesondere mittels Farblaserdruck zu bedruckende Folien eignen sich insbesondere solche der eingangs beschriebenen erfindungsgemäßen Folien, die einen spezifischen Oberflächenwiderstand von 10⁷ bis 10¹³ Ω, bevorzugt von 10⁸ bis 10¹² Ω aufweisen. Der spezifische Oberflächenwiderstand in Ω wird gemäß DIN IEC 60093 (1993) bestimmt.

Dabei kann es sich vorzugsweise um solche Folien handeln, bei denen dem Kunststoff vor der Folienherstellung zur Erzielung des spezifischen Oberflächenwiderstandes beispielsweise ein Additiv ausgewählt aus tertiären oder quaternären, bevorzugt quaternären Ammonium- oder Phosphoniumsalzen einer teil- oder perfluorierten organischen Säure oder quaternären Ammonium- oder Phosphoniumhexafluorophosphaten, bevorzugt einer teil- oder perfluorierten Alkylsulfonsäure, vorzugsweise einer Perfluoralkylsulfonsäure zugegeben wurde. Diese Additive können in den Schichten (i), (ii) und/oder (iii) enthalten sein.

Bevorzugte geeignete quarternäre Ammonium- oder Phosphoniumsalze sind:
- Perfluoroctansulfonsäuretetrapropylammoniumsalz,
- Perfluorbutansulfonsäuretetrapropylammoniumsalz,
- Perfluoroctansulfonsäuretetrabutylammoniumsalz,
- Perfluorbutansulfonsäuretetrabutylammoniumsalz,
- Perfluoroctansulfonsäuretetrapentylammoniumsalz,
- Perfluorbutansulfonsäuretetrapentylammoniumsalz,
- Perfluoroctansulfonsäuretetrahexylammoniumsalz,
- Perfluorbutansulfonsäuretetrahexylammoniumsalz,
- Perfluorbutansulfonsäuretrimethylneopentylammoniumsalz,
- Perfluoroctansulfonsäuretrimethylneopentylammoniumsalz,
- Perfluorbutansulfonsäuredimethyldineopentylammoniumsalz,
- Perfluoroctansulfonsäuredimethyldineopentylammoniumsalz,
- N-Methyl-tripropylammoniumperfluorbutylsulfonat,
- N-Ethyl-tripropylammoniumperfluorbutylsulfonat,
- Tetrapropylammoniumperfluorbutylsulfonat,
- Diisopropyldimethylammoniumperfluorbutylsulfonat,
- Diisopropyldimethylammoniumperfluoroctylsulfonat,
- N-Methyl-tributylammoniumperfluoroctylsulfonat
- Cyclohexyldiethylmethylammoniumperfluoroctylsulfonat,
- Cyclohexyltrimethylammoniumperfluoroctylsulfonat,
sowie die entsprechenden Phosphoniumsalze. Bevorzugt sind die Ammoniumsalze.

Bevorzugt können auch ein oder mehrere der vorstehend genannten quartären Ammonium- oder Phosphoniumsalze, also auch Mischungen eingesetzt werden.

Ganz besonders geeignet ist das Perfluoroctansulfonsäuretetrapropylammoniumsalz, das Perfluoroctansulfonsäuretetrabutylammoniumsalz, das Perfluoroctansulfonsäuretetrapentylammoniumsalz, das Perfluoroctansulfonsäuretetrahexylammoniumsalz und das Perfluoroctansulfonsäuredimethyldiisopropylammoniumsalz sowie die entsprechenden Perfluorbutansulfonsäuresalze.

In einer ganz besonders bevorzugten Ausführungsform kann Perfluorbutansulfonsäuredimethyldiisopropylammoniumsalz (Diisopropyldimethylammonium-perfluorbutylsulfonat) als Additiv verwendet werden.

Die genannten Salze sind bekannt oder können nach bekannten Methoden hergestellt werden. Die Salze der Sulfonsäuren lassen sich beispielsweise durch Zusammengeben äquimolarer Mengen der freien Sulfonsäure mit der Hydroxyform des entsprechenden Kations in Wasser bei Raumtemperatur und Einengen der Lösung darstellen. Andere Herstellungsverfahren sind beschrieben z.B. in DE-A 1 966 931 und NL-A 7 802 830.

Die genannten Salze werden vorzugsweise in Mengen von 0.001 bis 2 Gew.%, bevorzugt von 0.1 bis 1 Gew.% den thermoplastischen Kunststoffen vor der Formgebung zur erfindungsgemäßen Folie, welche zum Beispiel durch Extrusion oder Coextrusion erfolgen kann, zugegeben.

Ein weiterer Gegenstand der Erfindung ist ein Schichtaufbau umfassend wenigstens eine erfindungsgemäße Folie.

Ein weiterer Gegenstand der Erfindung ist ein Sicherheitsdokument, bevorzugt Identifikationsdokument und/oder eine Bankkarte enthaltend wenigstens eine erfindungsgemäße Folie.

Ein weiterer Gegenstand der Erfindung ist die Verwendung der erfindungsgemäßen Folie als Deckschicht in Sicherheitsdokumenten, bevorzugt Identifikationsdokumenten und/oder Bankkarten beansprucht. In dieser Ausführungsform der Erfindung benötigt das erfindungsgemäße Sicherheitsdokument, bevorzugt Identifikationsdokument und/oder Bankkarte idealerweise keine weiteren zusätzliche Schichten wie beispielsweise für den UV-Schutz, den Schutz vor mechanischer Beschädigung - wie z.B. Kratzfestbeschichtungen.

Das erfindungsgemäße Sicherheitsdokument, bevorzugt Identifikationsdokument und/oder Banckarte kann beispielsweise derart hergestellt werden, dass aus den verschiedenen Folien für den Aufbau des Sicherheitsdokuments, bevorzugt Identifikationsdokuments und/oder Bankkarte, in Folienstapel zusammengelegt und zu einem Schichtverbund laminiert und anschließend in die geeignete Form des Sicherheitsdokument, bevorzugt Identifikationsdokuments und/oder Bankkarte zugeschnitten wird. Gegebenenfalls können auf dieses Verbundlaminat nachträglich weitere Schichten aufgebracht werden, beispielsweise durch Aufkleben und/oder Auflaminieren weiterer Folien oder Beschichten mittels Lackzusammensetzungen.

Die folgenden Beispiele dienen der exemplarischen Erläuterung der Erfindung und sind nicht als Beschränkung aufzufassen.

### Beispiele

### Eingesetzte Rohstoffe:

**Makrolon™ 3108 (M.3108):** hochviskoses amorphes, thermoplastisches Bisphenol A-Polycarbonat mit einem MVR 6 g/10min nach ISO 1133 bei 300°C und 1,2 kg der Firma Covestro AG
**Eastar™ DN 010 (DN 010):** Poly- oder Copolykondensat einer Terephthalsäure aus 54,9 Gew.-% Terephthalsäure, 9,3 Gew.-% (38 Mol-% bezogen auf die Diolkomponente) Ethylenglykol und 35,8 Gew.-% (62 Mol-% bezogen auf die Diolkomponente) Cyclohexandimethanol-1,4, mit einer inherenten Viskosität von 0,74 dl/g (gemessen in einer 1:1 Mischung aus Phenol und Tetrachlorethan bei 25°C) der Firma Eastman Chemical Company.
**Eastar™ GN 001 (GN 001):** Poly- oder Copolykondensat einer Terephthalsäure aus 60,2 Gew.-% Terephthalsäure, 18,0 Gew.-% (65 Mol-% bezogen auf die Diolkomponente) Ethylenglykol, 1,5 Gew.-% Diethylenglykol (3 Mol-% bezogen auf die Diolkomponente) und 20,3 Gew.-% (32 Mol-% bezogen auf die Diolkomponente) Cyclohexandimethanol-1,4, mit einer inherenten Viskosität von 0,74 dl/g (gemessen in einer 1:1 Mischung aus Phenol und Tetrachlorethan bei 25°C) der Firma Eastman Chemical Company.
**Pocan™ B 1600 (PBT 1600):** Unmodifiziertes Polykondensat der Terephthalsäure und Butandiol-1,4 als Diolkomponente mit einer Melt Volume Rate (MVR) 14 g/10min nach ISO 1133 bei 260°C und 2,16 kg der Firma Lanxess AG.
**Pentacard™ PVC M 278/01 (PVC laserbar):** Laser beschreibbare PVC-Folie der Fa. Klöckner Pentaplast in einer Dicke von100 µm.
**Pentacard™ PETG MG05T00 (PETG laserbar):** Laser beschreibbare PETG-Folie der Fa. Klöckner Pentaplast in einer Dicke von 150 µm, Polykondensat einer Terephthalsäure aus 60,6 Gew.-% (100 Mol-% bezogen auf die Diolkomponente) Terephthalsäure, 18,8 Gew-% Ethandiol und 20,6 Gew.-% Cyclohexandimethanol-1,4 mit einer inherenten Viskosität von >/= 0,78 dL/g.
**Pentacard™ PETG (weiße Kernfolie) (PETG weiß):** Weiß opak eingefärbte PETG-Folie der Fa. Klöckner Pentaplast in einer Dicke von 300 µm für Karten-Kerne.
**Pentacard™ PVC (weiße Kernfolie) (PVC weiß):** Weiß opak eingefärbte PVC-Folie der Fa. Klöckner Pentaplast in einer Dicke von280 µm für Karten-Kerne.

### Masterbatch 1: Compoundierung eines hoch konzentrierten Masterbatches enthaltend ein lasersensibles Additiv

Die Herstellung des Masterbatches der für die Herstellung der laserbaren Schicht(en)eingesetzt wurde, erfolgte mit einem herkömmlichen Zweischnecken-Compoundierextruder (ZSK 32) bei für Polycarbonat üblichen Verarbeitungstemperaturen von 250 bis 330°C.

Es wurde ein Master-Batch mit folgender Zusammensetzung compoundiert und anschließend granuliert:
- 99,9 Gew.-% Polycarbonat Makrolon™ 3108
- 0,1 Gew.-% (1000 ppm) Flammruß 101 (Ruß der Fa. Degussa) mit einem mittleren Teilchengröße von 95 nm.

### Masterbatch 2: Compoundierung eines Masterbatches enthaltend ein Weißpigment als Füllstoff

Die Herstellung Masterbatches für die Herstellung einer weißen Schicht erfolgte mit einem herkömmlichen Zweischnecken-Compoundierextruder (ZSK 32) bei für Polycarbonat üblichen Verarbeitungstemperaturen von 250 bis 330°C.

Es wurde ein Master-Batch mit folgender Zusammensetzung compoundiert und anschließend granuliert:
- 70 Gew.-% Polycarbonat Makrolon™ 3108
- 30 Gew.-% Titandioxid (Kronos ™ 2230 der Fa. Kronos Titan) als Weißpigment-Füllstoff.

### Masterbatch 3: Compoundierung eines Masterbatches enthaltend ein lasersensibles Additiv

Die Herstellung des Masterbatches für die Herstellung der laserbaren Schicht(en) eingesetzt wurde, erfolgte mit einem herkömmlichen Zweischnecken-Compoundierextruder (ZSK 32) bei für Polycarbonat üblichen Verarbeitungstemperaturen von 250 bis 330°C.

Es wurde ein Master-Batch mit folgender Zusammensetzung compoundiert und anschließend granuliert:
- 99,994 Gew.-% Polycarbonat Makrolon™ 3108
- 0,006 Gew.-% (60 ppm).Flammruß 101 (Ruß der Fa. Degussa) mit einem mittleren Teilchengröße von 95 nm

### Allgemeine Herstellungvorschrift von Extrusions- und Coextrusionsfolien

Die verwendete Anlage besteht aus
▪ einem Extruder mit einer Schnecke von 105 mm Durchmesser (D) und einer Länge von 41xD. Die Schnecke weist eine Entgasungszone auf;
▪ einen Coextruder zum Aufbringen der Deckschicht mit einer Schnecke der Länge 25 D und einem Durchmesser von 35 mm
▪ einem Umlenkkopf;
▪ eine speziellen Coextrusions-Breitschlitzdüse mit 1500 mm Breite;
▪ einem Dreiwalzen-Glättkalander mit horizontaler Walzenanordnung, wobei die dritte Walze um +/- 45° gegenüber der Horizontalen schwenkbar ist;
▪ einer Rollenbahn;
▪ einer Einrichtung zum beidseitigen Aufbringen von Schutzfolie;
▪ einer Abzugseinrichtung;
▪ Aufwickelstation.

Das Granulat des Basismaterials wurde dem Fülltrichter des Hauptextruders zugeführt. Im jeweiligen Plastifiziersystem Zylinder/Schnecke erfolgte das Aufschmelzen und Fördern des jeweiligen Materials. Beide Materialschmelzen wurden in der Coextrusionsdüse zusammengeführt. Von der Düse gelangte die Schmelze auf den Glättkalander. Auf dem Glättkalander erfolgt die endgültige Formgebung und Abkühlung des Materials. Zur Strukturierung der Folienoberflächen wurden dabei zwei polierte Chrom-Walzen (1-er und 1-er Oberfläche) eingesetzt. Anschließend wurde die Folie durch einen Abzug transportiert, es wird die Schutzfolie beidseitig aufgebracht, danach erfolgte die Aufwicklung der Folie.

Die Zusammensetzungen der Folien der Beispiele werden in den Tabellen 1 und 2 beschrieben.

**Tabelle 1: Zusammensetzung der einschichtigen Extrusionsfolien (Beispiele 1 bis 4)**

| | Rezeptur | | Schmelzetemperatur |
|---|---|---|---|
| Beispiel 1 | M.3108 | 65% | 260°C |
| 50 µm Mono-Folie, transparent, nicht laserbar | DN 010 | 25% | |
| | PBT 1600 | 10% | |
| Beispiel 2 | M.3108 | 47% | 260°C |
| 50 µm Mono-Folie, transparent, laserbar | Masterbatch 3 | 18% | |
| | DN 010 | 25% | |
| | PBT 1600 | 10% | |
| Beispiel 3 | M.3108 | 54% | 260°C |
| 100 µm Mono-Folie, transparent, laserbar | Masterbatch 3 | 11% | |
| | DN 010 | 25% | |
| | PBT 1600 | 10% | |
| Beispiel 4 | M.3108 | 15% | 260°C |
| 100 und 200 µm Mono-Folie, weißopak, nicht laserbar | Masterbatch 2 | 50% | |
| | DN 010 | 25% | |
| | PBT 1600 | 10% | |

**Tabelle 2: Zusammensetzung der dreischichtigen Coextrusionsfolien (Beispiele 5 bis 8)**

| | Schicht (ii) | Dicke [µm] | Schicht (i) | Dicke [µm] | Schicht (iii) | Dicke [µm] |
|---|---|---|---|---|---|---|
| Beispiel 5 (Vergleich) | 100 Gew.-% GN 001 | 20 | 82 Gew.-% M.3108 | 60 | 100% Gew.-% GN 001 | 20 |
| | | | 18 Gew.-% Masterbatch 3 | | | |
| | | | 11 ppm lasersensibles Additiv | | | |
| Beispiel 6 (Vergleich) | 100 Gew.-% GN 001 | 10 | 90 Gew.-% M.3108 | 30 | 100 Gew.-% GN 001 | 10 |
| | | | 10 Gew.-% Master-batch 1 | | | |
| | | | 100 ppm lasersensibles Additiv | | | |
| Beispiel 7 (Vergleich) | 100 Gew.- % GN 001 | 10 | 95 Gew.-% M.3108 | 30 | 100 Gew.-% Eastar GN 001 | 10 |
| | | | 5 Gew.-% Masterbatch 1 | | | |
| | | | 50 ppm lasersensitives Additiv | | | |
| Beispiel 8 | 100 Gew.-% GN 001 | 10 | 55 Gew.-% M.3108 | 30 | 100 Gew.-% GN 001 | 10 |
| | | | 25 Gew.-% DN 010 | | | |
| | | | 10 Gew.-% PBT 1600 | | | |
| | | | 10 Gew.-% Master-batch 1 | | | |
| | | | 100 ppm lasersensibles Additiv | | | |

### Herstellung von laserbeschreibbaren Identifikationsdokumenten (ID-Karte)

Für den ID-Karten-Schichtaufbau eingesetzte Folien (neben den Folien der Beispiele 1 bis 8):
Folie 1-1: weiß gefüllte Folie für den Kern des Kartenaufbaus
   Es wurde eine Polycarbonatfolie der Dicke 300 µm aus Polycarbonat Makrolon™ 3108 und Master-batch 2 im Verhältnis 1:1 bei einer Massetemperatur von ca. 280°C mittels Extrusion hergestellt.
Folie 1-2: weiß gefüllte Folie für den Kern des Kartenaufbaus
   Es wurde eine Folie mit der gleichen Zusammensetzung wie Folie 1-1 der Dicke 350 µm hergestellt.
Folie 2: transparente Folie als nicht-laserbare Overlayfolie

Es wurde eine Polycarbonatfolie der Dicke 50 µm auf Basis Polycarbonat Makrolon™ 3108 bei einer Massetemperatur von ca. 280°C mittels Extrusion hergestellt.

Die laserbeschreibbaren ID-Dokumente wurden gemäß Schichtaufbau der Tabellen 3 und 4 wie folgt laminiert:
Es wurde ein symmetrischer Schichtaufbau der Karte gewählt, um ein Verbiegen der Karte zu vermeiden. Dazu wurde aus den Folien jeweils ein Stapel in der oben genannten Reihenfolge gebildet und die Lamination wurde auf einer Laminationspresse der Firma Bürkle mit folgenden Parametern durchgeführt. Es wurden Kartenaufbauten unter den Laminationsbedingungen A und B hergestellt:

### Bedingungen A

- Vorheizen der Presse auf 170-180°C
- Pressen für 8 Minuten bei einem Druck von 15 N/cm²
- Pressen für 2 Minuten bei einem Druck von 200 N/cm²
- Abkühlen der Presse auf 38°C und öffnen der Presse.

### Bedingungen B

Vorheizen der Presse auf 155°C
- Pressen für 8 Minuten bei einem Druck von 15 N/cm²
- Pressen für 2 Minuten bei einem Druck von 200 N/cm²
- Abkühlen der Presse auf 38°C und öffnen der Presse.

**Tabelle 3: Schichtaufbau der ID-Karten aus Folien der Beispiele 1 bis 8:**

| | ID-1 | ID-2 | ID-3 (Vergleich) | ID-4 (Vergleich) |
|---|---|---|---|---|
| Schicht (1) | 50 µm Folie Bsp. 2 | 100 µm Folie Bsp. 3 | 100 µm PETG laserbar | 100 µm PVC laserbar |
| Schicht (3) (Kernschicht) | 700 µm Folie Bsp. 4 (2x 350 µm Bsp.4) | 600 µm Folie Bsp. 4 (2x 300 µm Bsp.4) | PETG weiss (2x 300µm) | PVC weiss 2x 280µm |
| Schicht (1') | 50 µm Folie Bsp. 2 | 100 µm Folie Bsp. 3 | 100 µm PETG laserbar) | 100 µm PVC laserbar |

| | | | | |
|---|---|---|---|---|
| Bsp.: Beispiel | | | | |

**Tabelle 4: Schichtaufbau der ID-Karten aus Folien der Beispiele 5 bis 8:**

| | ID-5 Vergleich | ID-6 Vergleich | ID-7 Vergleich | ID-8 |
|---|---|---|---|---|
| Schicht (1) | 100 µm Folie Bsp. 5 | 50 µm Folie Bsp. 6 | 50 µm Folie Bsp. 7 | 50 µm Folie Bsp. 8 |
| Schicht (3) Kernschicht | 600 µm Folie 1-1 (2x 300 µm) | 700 µm Folie 1-2 (2x 350 µm) | 700 µm Folie 1-2 (2x 350 µm) | 700 µm Folie 1-2 (2x 350 µm) |
| Schicht (1') | 100 µm Folie Bsp. 5 | 50 µm Folie Bsp. 6 | 50 µm Folie Bsp. 7 | 50 µm Folie Bsp. 8 |

| | | | | |
|---|---|---|---|---|
| Bsp.: Beispiel | | | | |

### Ergebnisse der Laminationen

Alle Karten konnten ohne sogenannten Fließbauch untern der Bedingung A laminiert werden. Die Laminate ließen sich auch bereits bei 155°C (Bedingung B) laminieren. Dabei wurde eine sehr gute Haftkraft der Folien Beispiele 1, 2 und 3 zu der Inlay-Folie Beispiel 4, aber auch zu den Folien 1-1 oder 1-2 erzielt. Die Laminate der Vergleichsbeispiele ID-3 und ID-4 wurden mit gleichem Material im Kern laminiert.

Zur Prüfung der Beständigkeit der ID-Karten wurden Kartenbiegetests gemäß ISO/IEC 7810 AMD 2 (2012) und ISO/IEC 10373-1 AMD 1 (2012) mit den entsprechenden ID-Karten durchgeführt. Die Ergebnisse sind in Tabellen 5 und 6 aufgeführt.

**Tabelle 5: Ergebnisse der Kartenbiegetests mit künstlichem Hautfett (bezogen von der Fa. Wfk Testgewebe GmbH, Deutschland) und Aceton der Beispiele ID-1 bis ID-4**

| | ID-1 | ID-2 | ID-3 (Vergleich) | ID-4 (Vergleich) |
|---|---|---|---|---|
| Wechselbiegecyclen (Hautfett) | 20000 | 25000 | 15000 | 11500 |
| Wechselbiegecyclen (Aceton) | 17500 | 17500 | 14000 | <15000 |

**Tabelle 6: Ergebnisse der Kartenbiegetests mit künstlichem Hautfett (bezogen von der Fa. Fa. Wfk Testgewebe GmbH, Deutschland) und Aceton der Beispiele ID-5 bis ID-8**

| | ID-5 (Vergleich) | ID-6 (Vergleich) | ID-7 (Vergleich) | ID-8 |
|---|---|---|---|---|
| Wechselbiegecyclen (Hautfett) | 20000 | 17500 | 17500 | 17500 |
| Wechselbiegecyclen (Aceton) | 25000 | 25000 | 25000 | 25000 |

### Lasergravierung der laserbeschreibbaren Identifikationsdokumente ID-1 bis ID-8

Auf den ID-Karten a wurde eine Lasergravierung auf einer Laser-Anlage der Firma Foba mit folgenden Parametern durchgeführt:

| | |
|---|---|
| Laser Medium: | Nd:YAG |
| Wellennläge: | 1064 nm |
| Leistung: | 40 Watt |
| Strom: | 30 A |
| Pulsfrequenz: | 14 KHz. |
| Vorschubgeschwindigkeit: | 200 mm/sek. |

Bei der Lasergravierung wurde die Information nur auf eine der laserbeschreibbaren Folienschichten der ID-Karte geschrieben. Als Information wurde ein Graustufenkeil mittels Lasergravierung in die laserbeschreibbare Schicht geschrieben.

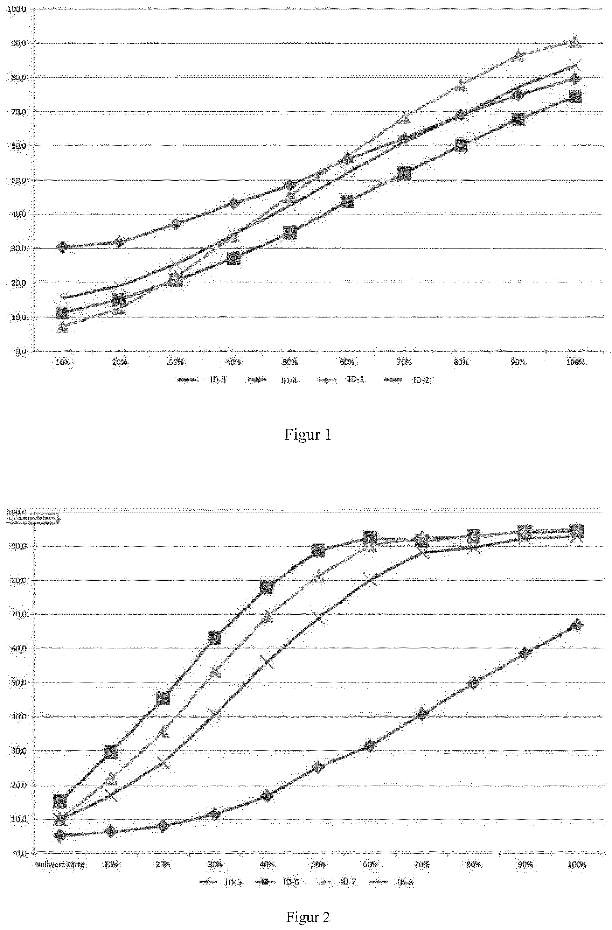

Figur 1 zeigt die Intensität der Schwarzfärbung in Abhängigkeit zur Intensität der Laserleistung während der der Laserbeschriftung der ID-Karten enthaltend einschichtige Folien (ID-1 bis ID-4). Die Karten der Vergleichsmuster ID-3 und ID-4 zeigten eine nicht reinweiße Grundfärbung und blieben beim Laserbeschreiben in ihrem Kontrast sehr blass und wenig farbintensiv. Demgegenüber waren die erfindungsgemäßen Karten ID-1 und ID-2 rein weiß, kontrastreich und in ihrer durch Laserbeschreibung erzeugten Färbung intensiv schwarz.

Figur 2 zeigt die Intensität der Schwarzfärbung in Abhängigkeit zur Intensität der Laserleistung während der der Laserbeschriftung der ID-Karten enthaltend mehrschichtige Folien (ID-5 bis ID-8). ID-5 zeigte zum einen eine vermindertet Laserbeschreibbarkeit und deutlich schlechtere Kontraste als die erfindungsgemäße KarteID-8. ID-6 (Vergleich) und ID-7 (Vergleich) zeigten zwar eine gute Laserbeschriftung, allerdings erreichte die Schwarzfärbung den Sättigungsbereich zu früh, so dass eine Differenzierung im laserbeschrifteten Bereich nicht mehr möglich ist. Besonders nachteilig ist aber, dass die Grundfärbung der Karte zu hoch (zu grau) ist. In der Figur 2 äußert sich dieser Effekt durch einen hohen Grauwert als Nullwert.

## Patentansprüche

1. Eine Folie umfassend wenigstens eine Schicht (i) enthaltend mindestens einen Blend aus wenigstens einem oder mehreren Poly-oder Copolykondensat(en) einer aromatischen und/oder Cycloalkyl-Dicarbonsäure und aliphatischen, cycloaliphatischen und/oder araliphatischen Diolen mit 2 bis 16 Kohlenstoffatomen mit einem oder mehreren Poly- oder Copolycarbonat(en), **dadurch gekennzeichnet, dass** der Anteil an Poly- oder Copolycarbonat(en) in diesem Blend in einem Bereich von ≥ 50 Gew.-% bis ≤ 90 Gew.-% liegt, und dass das oder die Poly-oder Copolykondensat(e) einer aromatischen und/oder Cycloalkyl-Dicarbonsäure und aliphatischen, cycloaliphatischen und/oder araliphatischen Diolen mit 2 bis 16 Kohlenstoffatomen einen Anteil an 1,4-Cyclohexandimethanol, 1,3-Cyclohexandimethanol und/oder 2,2,4,4-Tetramethyl-1,3-cyclobutandiol in einem Bereich von ≥ 20 bis ≤ 80 mol-% bezogen auf die Diolkomponente aufweisen, wobei diese wenigstens eine Schicht (i) wenigstens ein lasersensitives Additiv, vorzugsweise ein Schwarzpigment, besonders bevorzugt Ruß, enthält, wobei das lasersensitive Additiv, vorzugsweise ein Schwarzpigment, besonders bevorzugt Ruß, in einer Menge von 40 bis 180 ppm, vorzugsweise von 50 bis 160 ppm enthalten ist.

2. Die Folie gemäß Anspruch 1, wobei die aromatischen und/oder Cycloalkyl-Dicarbonsäure wenigstens eine Verbindung aus der Gruppe Orthophthalsäure, Terephthalsäure, Isophthalsäure, tert-Butylisophthalsäure, 3,3'-Diphenyl-dicarbonsäure, 4,4'-Diphenyldicarbonsäure, 4,4-Benzophenondicarbonsäure, 3,4'-Benzophenon-dicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5 '-dicarbonsäure, Naphthalin-1,4-dicarbonsäure, Naphthalin-1,5-dicarbonsäure, Naphthalin-2,6-dicarbonsäure und/oder Cyclohexandicarbonsäure oder die reaktionsfähigen Derivate der genannten Dicarbonsäuren, vorzugsweise Terephthalsäure, Naphthalin-1,4-dicarbonsäure, Naphthalin-1,5-dicarbonsäure, Naphthalin-2,6-dicarbonsäure und/oder Isophathalsäure oder die reaktionsfähigen Derivate der genannten Dicarbonsäuren, besonders bevorzugt Terephthalsäure und/oder Isophthalsäure oder deren reaktionsfähigen Derivate und ganz besonders bevorzugt Terephthalsäure oder ein reaktionsfähiges Derivat der Terephthalsäure umfasst.

3. Die Folie gemäß Anspruch 1 bis 2, wobei der Blend aus wenigstens einem oder mehreren Poly-oder Copolykondensat(en) einer aromatischen und/oder Cycloalkyl-Dicarbonsäure und aliphatischen, cycloaliphatischen und/oder araliphatischen Diolen mit 2 bis 16 Kohlenstoffatomen mit einem oder mehreren Poly- oder Copolycarbonat(en) einen Blend aus Poly- oder Copolybutylenterephthalat und/oder glykol-modifiziertem Poly- oder Copolycyclohexandimethylenterephthalat umfasst, mit der Maßgabe, dass der Anteil an Poly-oder Copolycarbonat(en) in diesem Blend in einem Bereich von ≥ 50 Gew.-% bis ≤ 90 Gew.-%, vorzugsweise einem Bereich von ≥ 60 Gew.-% bis ≤ 80 Gew.-% ganz besonders bevorzugt in einem Bereich von ≥ 60 Gew.-% bis ≤ 70 Gew.-% liegt, und dass das oder die Poly-oder Copolyterephthalate einen Anteil an 1,4-Cyclohexandimethanol, 1,3-Cyclohexandimethanol und/oder Tetramethyl-1,3-Cyclobutandiol, vorzugsweise 1,4-Cyclohexandimethanol und/oder 1,3-Cyclohexandimethanol in einem Bereich von ≥ 20 bis ≤ 80 mol-%, vorzugsweise in einem Bereich von ≥ 25 bis ≤ 75 mol-% und besonders bevorzugt in einem Bereich von ≥ 25 bis ≤ 70 mol-%, bezogen auf die Diolkomponente aufweist.

4. Die Folie gemäß Anspruch 1 bis 3, wobei die Folie eine weitere Schicht (ii) umfasst und diese weitere Schicht ein oder mehrere Poly-oder Copolycondensat(e) einer aromatischen und/oder Cycloalkyl-Dicarbonsäure und aliphatischen, cycloaliphatischen und/oder araliphatischen Diolen mit 2 bis 16 Kohlenstoffatomen enthält.

5. Die Folie gemäß Anspruch 4, wobei die Folie eine dritte Schicht (iii) umfasst, wobei diese dritte Schicht ein oder mehrere Poly-oder Copolycondensat(e) einer aromatischen und/oder Cycloalkyl-Dicarbonsäure und aliphatischen, cycloaliphatischen und/oder araliphatischen Diolen mit 2 bis 16 Kohlenstoffatomen umfasst und die Schichten so angeordnet sind, dass die beiden Schichten (ii) und (iii) die äußeren Schichten der Folie bilden.

6. Die Folie gemäß Anspruch 4 oder 5, wobei die Schicht (ii) und/oder die Schicht (iii) frei von Poly- und/oder Copolycarbonat ist.

7. Die Folie gemäß Anspruch 4 bis 6, wobei die Schicht (ii) und/oder die Schicht (iii) einen Anteil an 1,4-Cyclohexandimethanol, 1,3-Cyclohexandimethanol und/oder 2,2,4,4-Tetramethyl-1,3-butandiol, vorzugsweisel,4-Cyclohexandimethanol und/oder 1,3-Cyclohexandimethanol, in einem Bereich von ≥ 20 bis ≤ 80 mol-%, vorzugsweise in einem Bereich von ≥ 25 bis ≤ 75 mol-% und besonders bevorzugt in einem Bereich von ≥ 25 bis ≤ 70 mol-%, bezogen auf die Diolkomponente des einen oder mehreren Poly- oder Copolykondesat(s) einer aromatischen und/oder Cycloalkyl-Dicarbonsäure und aliphatischen, cycloaliphatischen und/oder araliphatischen Diolen mit 2 bis 16 Kohlenstoffatomen.

8. Die Folie gemäß Anspruch 1 bis 7, wobei die Folie eine Gesamtschichtdicke im Bereich von ≥ 30 bis ≤ 145 µm, vorzugsweise im Bereich von ≥ 40 bis ≤ 120 µm, ganz besonders bevorzugt im Bereich von ≥ 40 bis ≤ 110 µm aufweist.

9. Die Folie gemäß Anspruch 4 bis 8, wobei die äußeren Schichten ii) und iii) gleich in ihrer Zusammensetzung sind.

10. Die Folie gemäß Anspruch 4 bis 9, wobei die Folie mittels Coextrusion hergestellt wird.

11. Ein Schichtaufbau, umfassend wenigstens eine Folie gemäß Anspruch 1 bis 10.

12. Ein Sicherheitsdokument, bevorzugt ein Identifikationsdokument und/oder eine Bankkarte enthaltend wenigstens eine Folie gemäß Anspruch 1 bis 10.

13. Verwendung einer Folie gemäß Anspruch 1 bis 10 als Deckschicht in Sicherheitsdokumenten, bevorzugt Identifikationsdokument und/oder Bankkarten.

## Claims

1. Film comprising at least one layer (i) containing at least one blend of at least one or more poly- or copolycondensates of an aromatic and/or cycloalkyl-dicarboxylic acid and aliphatic, cycloaliphatic and/or araliphatic diols having 2 to 16 carbon atoms with one or more poly- or copolycarbonates, **characterized in that** the fraction of poly- or copolycarbonate(s) in this blend is situated in a range from ≥ 50 wt% to ≤ 90 wt%, and **in that** the poly- or copolycondensate(s) of an aromatic and/or cycloalkyl-dicarboxylic acid and aliphatic, cycloaliphatic and/or araliphatic diols having 2 to 16 carbon atoms has or have a fraction of 1,4-cyclohexanedimethanol, 1,3-cyclohexanedimethanol and/or 2,2,4,4-tetramethyl-1,3-cyclobutanediol in a range from ≥ 20 to ≤ 80 mol%, based on the diol component, with this at least one layer (i) containing at least one laser-sensitive additive, preferably a black pigment, more preferably carbon black, with the laser-sensitive additive, preferably a black pigment, more preferably carbon black, being present in an amount of 40 to 180 ppm, preferably of 50 to 160 ppm.

2. Film according to Claim 1, where the aromatic and/or cycloalkyl-dicarboxylic acid comprises at least one compound from the group of orthophthalic acid, terephthalic acid, isophthalic acid, tert-butyl isophthalic acid, 3,3'-biphenyldicarboxylic acid, 4,4'-biphenyldicarboxylic acid, 4,4-benzophenonedicarboxylic acid, 3,4'-benzophenonedicarboxylic acid, 4,4'-diphenyl ether dicarboxylic acid, 4,4'-diphenyl sulfone dicarboxylic acid, 2,2-bis(4-carboxyphenyl)propane, trimethyl-3-phenylindane-4,5'-dicarboxylic acid, naphthalene-1,4-dicarboxylic acid, naphthalene-1,5-dicarboxylic acid, naphthalene-2,6-dicarboxylic acid and/or cyclohexanedicarboxylic acid, or the reactive derivatives of the stated dicarboxylic acids, preferably terephthalic acid, naphthalene-1,4-dicarboxylic acid, naphthalene-1,5-dicarboxylic acid, naphthalene-2,6-dicarboxylic acid and/or isophthalic acid, or the reactive derivatives of the stated dicarboxylic acids, more preferably terephthalic acid and/or isophthalic acid or their reactive derivatives, and very preferably terephthalic acid or a reactive derivative of terephthalic acid.

3. Film according to Claim 1 to 2, where the blend of at least one or more poly- or copolycondensates of an aromatic and/or cycloalkyl-dicarboxylic acid and aliphatic, cycloaliphatic and/or araliphatic diols having 2 to 16 carbon atoms with one or more poly- or copolycarbonates comprises a blend of poly- or copolybutylene terephthalate and/or glycol-modified poly- or copolycyclohexanedimethylene terephthalate, with the proviso that the fraction of poly- or copolycarbonate (s) in this blend is situated in a range from ≥ 50 wt% to ≤ 90 wt%, preferably in a range from ≥ 60 wt% to ≤ 80 wt%, very preferably in a range from ≥ 60 wt% to ≤ 70 wt%, and in that the poly- or copolyterephthalate(s) has or have a fraction of 1,4-cyclohexanedimethanol, 1,3-cyclohexanedimethanol and/or tetramethyl-1,3-cyclobutanediol, preferably 1,4-cyclohexanedimethanol and/or 1,3-cyclohexanedimethanol, in a range from ≥ 20 to ≤ 80 mol%, preferably in a range from ≥ 25 to ≤ 75 mol% and more preferably in a range from ≥ 25 to ≤ 70 mol%, based on the diol component.

4. Film according to Claim 1 to 3, where the film comprises a further layer (ii) and this further layer contains one or more poly- or copolycondensates of an aromatic and/or cycloalkyl-dicarboxylic acid and aliphatic, cycloaliphatic and/or araliphatic diols having 2 to 16 carbon atoms.

5. Film according to Claim 4, where the film comprises a third layer (iii), where this third layer comprises one or more poly- or copolycondensates of an aromatic and/or cycloalkyl-dicarboxylic acid and aliphatic, cycloaliphatic and/or araliphatic diols having 2 to 16 carbon atoms, and the layers are arranged in such a way that the two layers (ii) and (iii) form the outer layers of the film.

6. The film according to Claim 4 or 5, where the layer (ii) and/or the layer (iii) are/is free from poly- and/or copolycarbonate.

7. Film according to Claim 4 to 6, where the layer (ii) and/or the layer (iii) comprises a fraction of 1,4-cyclohexanedimethanol, 1,3-cyclohexanedimethanol and/or 2,2,4,4-tetramethyl-1,3-butanediol, preferably 1,4-cyclohexanedimethanol and/or 1,3-cyclohexanedimethanol, in a range from ≥ 20 to ≤ 80 mol%, preferably in a range from ≥ 25 to ≤ 75 mol% and more preferably in a range from ≥ 25 to ≤ 70 mol%, based on the diol component of the one or more poly- or copolycondensates of an aromatic and/or cycloalkyl-dicarboxylic acid and aliphatic, cycloaliphatic and/or araliphatic diols having 2 to 16 carbon atoms.

8. Film according to Claim 1 to 7, where the film has an overall layer thickness in the range from ≥ 30 to ≤ 145 µm, preferably in the range from ≥ 40 to ≤ 120 µm, very preferably in the range from ≥ 40 to ≤ 110 µm.

9. Film according to Claim 4 to 8, where the outer layers (ii) and (iii) are identical in their composition.

10. Film according to Claim 4 to 9, where the film is produced by means of coextrusion.

11. Layer structure comprising at least one film according to Claim 1 to 10.

12. Security document, preferably an identification document and/or a bank card, containing at least one film according to Claim 1 to 10.

13. Use of a film according to Claim 1 to 10 as top layer in security documents, preferably identification documents and/or bank cards.

## Revendications

1. Feuille comprenant au moins une couche (i) contenant au moins un mélange d'au moins un ou de plusieurs produits de polycondensation ou de copolycondensation d'un acide dicarboxylique aromatique et/ou cycloalkylique et de diols aliphatiques, cycloaliphatiques et/ou araliphatiques comprenant 2 à 16 atomes de carbone avec un ou plusieurs polycarbonates ou copolycarbonates, **caractérisée en ce que** la proportion de polycarbonate(s) ou de copolycarbonate(s) dans ce mélange se situe dans une plage de ≥ 50% en poids à ≤ 90% en poids et **en ce que** le ou les produits de polycondensation ou de copolycondensation d'un acide dicarboxylique aromatique et/ou cycloalkylique et de diols aliphatiques, cycloaliphatiques et/ou araliphatiques comprenant 2 à 16 atomes de carbone présentent une proportion de 1,4-cyclohexanediméthanol, de 1,3-cyclohexanediméthanol et/ou de 2,2,4,4-tétraméthyl-1,3-cyclobutanediol dans une plage de ≥ 20 à ≤ 80% en mole par rapport au composant diol, ladite au moins une couche (i) contenant au moins un additif sensible au laser, de préférence un pigment noir, de manière particulièrement préférée de la suie, l'additif sensible au laser, de préférence un pigment noir, de manière particulièrement préférée de la suie, étant contenu(e) en une quantité de 40 à 180 ppm, de préférence 50 à 160 ppm.

2. Feuille selon la revendication 1, l'acide dicarboxylique aromatique et/ou cycloalkylique comprenant au moins un composé du groupe formé par l'acide orthophtalique, l'acide téréphtalique, l'acide isophtalique, l'acide tert-butylisophtalique, l'acide 3,3'-diphényldicarboxylique, l'acide 4,4'-diphényldicarboxylique, l'acide 4,4-benzophénonedicarboxyique, l'acide 3,4'-benzophénonedicarboxylique, l'acide 4,4'-diphénylétherdicarboxylique, l'acide 4,4'-diphénylsulfonedicarboxylique, le 2,2-bis-(4-carboxyphényl)-propane, l'acide triméthyl-3-phénylindane-4,5'-dicarboxylique, l'acide naphtalène-1,4-dicarboxylique, l'acide naphtalène-1,5-dicarboxylique, l'acide naphtalène-2,6-dicarboxylique et/ou l'acide cyclohexanedicarboxylique ou les dérivés réactionnels des acides dicarboxyliques mentionnés, de préférence l'acide téréphtalique, l'acide naphtalène-1,4-dicarboxylique, l'acide naphtalène-1,5-dicarboxylique, l'acide naphtalène-2,6-dicarboxylique et/ou l'acide isophtalique ou les dérivés réactionnels des acides dicarboxyliques mentionnés, de manière particulièrement préférée l'acide téréphtalique et/ou l'acide isophtalique ou leurs dérivés réactionnels et de manière tout particulièrement préférée l'acide téréphtalique ou un dérivé réactionnel de l'acide téréphtalique.

3. Feuille selon la revendication 1 à 2, le mélange d'au moins un ou de plusieurs produits de polycondensation ou de copolycondensation d'un acide dicarboxylique aromatique et/ou cycloalkylique et de diols aliphatiques, cycloaliphatiques et/ou araliphatiques comprenant 2 à 16 atomes de carbone avec un ou plusieurs polycarbonates ou copolycarbonates comprenant un mélange de poly(téréphtalate de butylène) ou de copoly(téréphtalate de butylène) et/ou de poly(téréphtalate de cyclohexanediméthylène) ou de copoly(téréphtalate de cyclohexanediméthylène) modifié par glycol, à condition que la proportion de polycarbonate(s) ou de copolycarbonate(s) dans ce mélange se situe dans une plage de ≥ 50% en poids à ≤ 90% en poids, de préférence de ≥ 60% en poids à ≤ 80% en poids, de manière tout particulièrement préférée dans une plage de ≥ 60% en poids à ≤ 70% en poids et en ce que le ou les polytéréphtalates ou copolytéréphtalates présentent une proportion de 1,4-cyclohexanediméthanol, de 1,3-cyclohexanediméthanol et/ou de tétraméthyl-1,3-cyclobutanediol, de préférence de 1,4-cyclohexanediméthanol et/ou de 1,3-cyclohexanediméthanol dans une plage de ≥ 20 à ≤ 80% en mole, de préférence dans une plage de ≥ 25 à ≤ 75% en mole et de manière particulièrement préférée dans une plage de ≥ 25 à ≤ 70% en mole, par rapport au composant diol.

4. Feuille selon la revendication 1 à 3, la feuille comprenant une autre couche (ii) et cette autre couche contenant un ou plusieurs produits de polycondensation ou de copolycondensation d'un acide dicarboxylique aromatique et/ou cycloalkylique et de diols aliphatiques, cycloaliphatiques et/ou araliphatiques comprenant 2 à 16 atomes de carbone.

5. Feuille selon la revendication 4, la feuille comprenant une troisième couche (iii) et cette troisième couche comprenant un ou plusieurs produits de polycondensation ou de copolycondensation d'un acide dicarboxylique aromatique et/ou cycloalkylique et de diols aliphatiques, cycloaliphatiques et/ou araliphatiques comprenant 2 à 16 atomes de carbone et les couches étant agencées de manière telle que les deux couches (ii) et (iii) forment les couches externes de la feuille.

6. Feuille selon la revendication 4 ou 5, la couche (ii) et/ou la couche (iii) étant exempte(s) de polycarbonate et/ou de copolycarbonate.

7. Feuille selon la revendication 4 à 6, la couche (ii) et/ou la couche (iii) comprend une proportion de 1,4-cyclohexanediméthanol, de 1,3-cyclohexanediméthanol et/ou de 2,2,4,4-tétraméthyl-1,3-butanediol, de préférence de 1,4-cyclohexanediméthanol et/ou de 1,3-cyclohexanediméthanol, dans une plage de ≥ 20 à ≤ 80% en mole, de préférence dans une plage de ≥ 25 à ≤ 75% en mole et de manière particulièrement préférée dans une plage de ≥ 25 à ≤ 70% en mole, par rapport au composant diol dudit un ou desdits plusieurs produits de polycondensation ou de copolycondensation d'un acide dicarboxylique aromatique et/ou cycloalkylique et de diols aliphatiques, cycloaliphatiques et/ou araliphatiques comprenant 2 à 16 atomes de carbone.

8. Feuille selon la revendication 1 à 7, la feuille présentant une épaisseur totale de couche dans la plage de ≥ 30 à ≤ 145 µm, de préférence dans la plage de ≥ 40 à ≤ 120 µm, de manière tout particulièrement préférée dans la plage de ≥ 40 à ≤ 110 µm.

9. Feuille selon la revendication 4 à 8, les couches externes (ii) et (iii) étant identiques en ce qui concerne leur composition.

10. Feuille selon la revendication 4 à 9, la feuille étant préparée par coextrusion.

11. Structure stratifiée comprenant au moins une feuille selon la revendication 1 à 10.

12. Document de sécurité, de préférence document d'identification, et/ou carte bancaire contenant au moins une feuille selon la revendication 1 à 10.

13. Utilisation d'une feuille selon la revendication 1 à 10 comme couche de recouvrement dans des documents de sécurité, de préférence un document d'identification, et/ou des cartes bancaires.
